# EUROPEAN PATENT APPLICATION

(11) **EP 4 425 483 A1**
(43) Date of publication of application: **04.09.2024**
(21) Application number: 23826539.1
(22) Date of filing: 21.06.2023
(51) Int. Cl.: G10L 15/02

(54) **VOICE INTERACTION METHOD AND RELATED APPARATUS**

(30) Priority: 25.06.2022 CN 202210728191
(71) Applicant: Huawei Technologies Co., Ltd., Shenzhen, Guangdong 518129 (CN)
(72) Inventor: GENG, Jie, Shenzhen, Guangdong 518129 (CN); CHAI, Haishui, Shenzhen, Guangdong 518129 (CN); ZHAO, Wei, Shenzhen, Guangdong 518129 (CN); JIN, Hongbin, Shenzhen, Guangdong 518129 (CN); SUN, Sicong, Shenzhen, Guangdong 518129 (CN)
(74) Representative: Goddar, Heinz J.
(86) International application number: PCT/CN2023/101818
(87) International publication number: WO 2023/246894

(57) **Abstract**

A voice interaction method and a related apparatus are provided. When a voice assistant is not woken up, an electronic device (100) may recognize whether a detected voice matches a preset intention. If the voice matches the intention, the electronic device (100) may perform an operation corresponding to the intention that matches the voice, and wake up the voice assistant. After waking up the voice assistant, the electronic device (100) can more accurately respond to a subsequent request of a user. If there is no voice interaction in a preset time period after the voice assistant is woken up, the electronic device (100) may switch the voice assistant from a wake-up state to a sleep state. In the foregoing method, the electronic device (100) may quickly respond to the request of the user when the voice assistant is in the sleep state. The user may deliver a voice instruction at any time without waking up the voice assistant, to instruct the electronic device to perform a corresponding operation.

## Description

This application claims priority to Chinese Patent Application No. 202210728191.8, filed with the China National Intellectual Property Administration on June 25, 2022 and entitled "VOICE INTERACTION METHOD AND RELATED APPARATUS", which is incorporated herein by reference in its entirety.

### TECHNICAL FIELD

This application relates to the field of terminal technologies, and in particular, to a voice interaction method and a related apparatus.

### BACKGROUND

Currently, increasingly more devices can provide a voice interaction function, so that a user can control a device through voice. For example, the user may deliver a voice instruction "play music" to the device. The device may play music after recognizing the voice instruction. However, each time the user delivers a voice instruction to the device, the user needs to wake up a voice interaction application in the device by using a wake-up word, and then speak the voice instruction. As a result, a process of performing voice interaction between the user and the device is not smooth, and the user needs to frequently speak the wake-up word to control the device through voice. This results in poor user experience.

### SUMMARY

This application provides a voice interaction method and a related apparatus. In the foregoing method, on a basis of reducing power consumption of an electronic device, a user may enjoy full-time wake-up-free voice interaction experience. The user may deliver a voice instruction at any time without waking up a voice assistant, to instruct the electronic device to perform a corresponding operation.

According to a first aspect, this application provides a voice interaction method. The method is applied to an electronic device. The electronic device includes a voice assistant. The electronic device may receive a first voice when the voice assistant is in a sleep state. The electronic device may determine that the first voice matches a first intention in a first list, where the first list includes an intention corresponding to one or more voice instructions. The electronic device may perform an operation corresponding to the first intention. The electronic device may wake up the voice assistant. The electronic device may receive a second voice when the voice assistant is in a wake-up state. The electronic device may recognize a second intention in the second voice, and perform an operation corresponding to the second intention.

It may be learned from the foregoing method that, when the voice assistant is not woken up, the electronic device may detect, in real time, whether a voice spoken by a user matches the intention in the first list. When detecting that the voice spoken by the user matches the intention in the first list, the electronic device may directly perform an operation corresponding to the intention. The first list includes the intention corresponding to the voice instruction. In other words, the user may directly deliver, to the electronic device, the voice instruction corresponding to the intention in the first list, without first waking up the voice assistant. In addition, after delivering the voice instruction, the electronic device may further wake up the voice assistant in addition to performing an operation corresponding to the voice instruction. In this way, the user may further deliver more voice instructions to the electronic device, to perform a plurality of rounds of voice interaction with the electronic device without performing a wake-up operation.

With reference to the first aspect, in some embodiments, the first list may be an execution intention list in this application. The intention included in the first list may be referred to as an execution intention. The first list may include an intention corresponding to a commonly used voice instruction of the user. The commonly used voice instruction may include a voice instruction with a high frequency of use, a low recognition error rate, and no ambiguity. The recognition error rate may be a probability that a voice that is spoken by the user and that does not include a voice instruction is incorrectly recognized as a voice instruction. In this way, it may be convenient for the user to directly deliver the commonly used voice instruction to control the electronic device to perform a corresponding operation without performing the wake-up operation.

With reference to the first aspect, in some embodiments, neither the first voice nor the second voice includes a wake-up word used to wake up the voice assistant.

With reference to the first aspect, in some embodiments, the electronic device may include a first voice recognition model and a second voice recognition model. A size of the second voice recognition model is greater than a size of the first voice recognition model. The size of the first voice recognition model and the size of the second voice recognition model may be sizes of storage space required by the voice recognition models. A larger size of the voice recognition model may indicate higher computing power of the voice recognition model. The computing power may represent a capability of processing and computing data by the voice recognition model. That is, computing power of the second voice recognition model is higher than computing power of the first voice recognition model. Lower computing power of the voice recognition model indicates lower power consumption of the voice recognition model and fewer computing resources that are required. In other words, under a same running condition, power consumption of the second voice recognition model is higher than power consumption of the first voice recognition model. Computing resources required by the second voice recognition model are greater than computing resources required by the first voice recognition model. Lower computing power of the voice recognition model indicates that a quantity of parameters used by the voice recognition model may be smaller. That is, a quantity of parameters used by the second voice recognition model is greater than a quantity of parameters used by the first voice recognition model.

When the voice assistant is in the sleep state, the electronic device may run the first voice recognition model in real time. The electronic device may determine, by using the first voice recognition model, that the first voice matches the first intention in the first list.

When the voice assistant is woken up, the electronic device may run the second voice recognition model when the voice assistant is in the wake-up state. The electronic device may recognize the second intention in the second voice by using the second voice recognition model. The electronic device does not need to use the first list when recognizing, by using the second voice recognition model, the intention in the received voice.

Because the power consumption of the first voice recognition model is low, when the electronic device runs a low computing power voice recognition model in real time without waking up the voice assistant, usually no excessively high power consumption is generated, and problems such as heating and running freezing of the electronic device are not caused. The electronic device continuously runs the low computing power voice recognition model when the voice assistant is not woken up, so that power consumption may be reduced as much as possible, and the user may enjoy full-time wake-up-free experience. When recognizing that the detected voice matches the first intention, the electronic device may further wake up the voice assistant in addition to performing the operation corresponding to the first intention. In this way, after the voice assistant is woken up, the electronic device may more accurately recognize a subsequent request of the user, to provide better voice interaction experience for the user.

With reference to the first aspect, in some embodiments, after the voice assistant is woken up, the electronic device may further switch the voice assistant from the wake-up state to the sleep state when no voice is received in a first time period.

The first time period may be a period of time in which a moment at which the electronic device receives the voice for the last time is a start moment and whose duration is preset duration (for example, 5 seconds or 10 seconds) when the voice assistant is in the wake-up state. Alternatively, the first time period may be a period of time in which a moment at which the electronic device recognizes the voice instruction from the received voice for the last time is a start moment and whose duration is preset duration when the voice assistant is in the wake-up state. Alternatively, the first time period may be a period of time in which a moment at which the electronic device performs a corresponding operation in response to the received voice instruction for the last time is a start moment and whose duration is preset duration when the voice assistant is in the wake-up state.

For example, the electronic device does not detect, in a period of time after receiving the second voice, that there is a voice in an environment. In this case, the first time period may be a period of time in which a moment at which the electronic device receives the second voice is a start moment and whose duration is preset duration. For another example, the electronic device detects no voice in the environment after performing the operation corresponding to the second intention in the second voice. In this case, the first time period may be a period of time in which a moment at which the electronic device completes the operation corresponding to the second intention is a start moment and whose duration is preset duration.

In the foregoing embodiment, when the user does not deliver the voice instruction after the voice assistant is woken up, power consumption of a high computing power voice recognition model that is run by the electronic device for a long time may be avoided from being excessively high, thereby reducing power consumption of the electronic device.

With reference to the first aspect, in some embodiments, the first list corresponds to a first sentence pattern list and a first entity list, the first sentence pattern list includes one or more sentence patterns, the first entity list includes one or more entities, and the one or more intentions in the first list include a sentence pattern in the first sentence pattern list and an entity in the first entity list. The electronic device may receive a third voice when the voice assistant is in the sleep state. The electronic device may determine that a sentence pattern of the third voice matches a first sentence pattern in the first sentence pattern list, and that there is no entity that matches a first entity of the third voice in the first entity list. The electronic device may wake up the voice assistant. When the voice assistant is in the wake-up state, the electronic device may recognize a third intention in the third voice, and perform an operation corresponding to the third intention, where the third intention includes the first sentence pattern and the first entity.

The intentions in the first list may be classified into an intention with an entity and an intention without an entity on a basis of whether the intention has an entity. An entity may be a specific instance of a category of things. For example, the category of things corresponding to the entity may include one or more of the following: a song name, a singer name, a place name, a movie name, a TV series name, a book name, a train number, a flight number, a phone number, an email address, and the like. The category of things corresponding to the foregoing entity may also be referred to as an entity category. The intention with an entity is an intention that includes an entity. The intention with an entity may include a sentence pattern and an entity. The sentence pattern may include a main structure and an entity placeholder of the sentence pattern. The entity placeholder is used to determine a location used to place an entity in the sentence pattern. A sentence pattern of the intention with an entity may support placing any entity of a same category of things at a location of the entity placeholder. The intention without an entity is an intention that does not include an entity.

When the voice assistant is in the sleep state, the electronic device may determine, by using the first voice recognition model, that the sentence pattern of the third voice matches the first sentence pattern in the first sentence pattern list, and that there is no entity that matches the first entity of the third voice in the first entity list. Then, when the voice assistant is in the wake-up state, the electronic device may recognize the third intention in the third voice by using the second voice recognition model.

It may be learned from the foregoing embodiment that, even if the voice spoken by the user does not match the intention currently included in the first list when the user delivers the voice instruction, the electronic device may still respond to the voice, to perform the operation corresponding to the voice instruction delivered by the user. The foregoing method may better provide full-time wake-up-free voice interaction experience for the user.

With reference to the first aspect, in some embodiments, when determining that the sentence pattern of the third voice matches the first sentence pattern in the first sentence pattern list, and there is no entity that matches the first entity of the third voice in the first entity list, the electronic device may prompt the user to repeat the third voice (where for example, the electronic device may perform voice broadcast "I did not catch it, please say it again"), and wake up the voice assistant. The user may repeat the third voice based on the prompt of the electronic device. When the voice assistant is in the wake-up state, the electronic device may receive a voice in which the user repeats the third voice, and recognize the voice by using the second voice recognition model, to recognize the third intention in the voice. Then, the electronic device may perform the operation corresponding to the third intention.

With reference to the first aspect, in some embodiments, when determining that the sentence pattern of the third voice matches the first sentence pattern in the first sentence pattern list, and there is no entity that matches the first entity of the third voice in the first entity list, the electronic device may further add the first entity of the third voice to the first entity list. In this way, when the user speaks again the voice that is the same as the third voice, the electronic device may determine, by using the first voice recognition model when the voice assistant is in the sleep state, that the voice matches the intention in the first list, to directly perform the operation corresponding to the intention.

It may be learned that, in a process of performing voice interaction, the electronic device may further adjust the first entity list through self-learning, so that the first entity list includes more entities commonly used by the user, and the intention included in the first list is closer to the commonly used voice instruction of the user, to improve use experience of performing voice interaction between the user and the electronic device.

With reference to the first aspect, in some embodiments, after adding the first entity of the third voice to the first entity list, the electronic device receives a fourth voice when the voice assistant is in the sleep state. The electronic device may determine that a sentence pattern of the fourth voice matches the first sentence pattern in the first sentence pattern list, and that an entity of the fourth voice matches the first entity in the first entity list, where the fourth voice matches the third intention. The electronic device may perform the operation corresponding to the third intention. The electronic device may wake up the voice assistant.

It may be learned that, after self-learning, the electronic device may add the first entity to the first entity list. The first entity and the first sentence pattern may constitute the third intention. In this case, that the electronic device adds the first entity to the first entity list may be equivalent to that the third intention is added to the first list. In this way, the user may directly deliver, to the electronic device, a voice instruction corresponding to the third intention, without first waking up the voice assistant. In addition, after delivering the voice instruction corresponding to the third intention, the electronic device may further wake up the voice assistant in addition to performing the operation corresponding to the third intention. In this way, the user may further deliver more voice instructions to the electronic device, to perform a plurality of rounds of voice interaction with the electronic device without performing the wake-up operation.

With reference to the first aspect, in some embodiments, the electronic device may receive a fifth voice when the voice assistant is in the sleep state. The electronic device may determine that the fifth voice matches a fourth intention in a second list, where one intention in the second list is associated with the one or more intentions in the first list, and the fourth intention is associated with a fifth intention in the first list. The electronic device may provide a first prompt, where the first prompt is for prompting the user to speak a voice that matches the fifth intention.

The second list may be an extension intention list in this embodiment of this application. The intention in the second list may be referred to as an extension intention. The second list may include an intention corresponding to a voice that is not direct and has a high recognition error rate and that is spoken by the user when the user expresses the commonly used voice instruction. The electronic device may detect, based on the second list, whether the received voice matches the extension intention in the second list. If the voice spoken by the user matches the extension intention, it indicates that the voice spoken by the user is doubtful. When detecting that the received voice matches the extension intention, the electronic device may provide the first prompt to the user based on an execution intention associated with the extension intention, to confirm whether the user wants to implement the execution intention associated with the extension intention. After determining that the user wants to implement the execution intention associated with the extension intention, the electronic device may perform an operation corresponding to the execution intention, and perform voice interaction with the user. In the foregoing embodiment, when the voice assistant is not woken up, the voice instruction that may be delivered by the user is not missed for recognition, and an error response to a voice of a non-voice instruction that is spoken by the user is not made, thereby improving voice interaction experience of the user.

With reference to the first aspect, in some embodiments, after providing the first prompt, the electronic device further receives a sixth voice. The electronic device may determine that the sixth voice matches the fifth intention, and perform an operation corresponding to the fifth intention. The electronic device may wake up the voice assistant.

It may be learned that, by using the extension intention list, the electronic device may further prompt, in response to a doubtful voice that is spoken by the user, the user to speak a more direct and doubtless voice instruction (namely, a voice that matches the execution intention associated with the extension intention), to determine whether the user delivers the voice instruction. That the user speaks, based on the first prompt, the voice that matches the execution intention may indicate that the user wants to deliver the voice instruction. In this way, the electronic device may perform the operation corresponding to the voice instruction delivered by the user. In the foregoing embodiment, when the voice assistant is not woken up, a case in which the voice instruction that may be delivered by the user is missed for recognition may be reduced, thereby improving voice interaction experience of the user.

With reference to the first aspect, in some embodiments, after the electronic device provides the first prompt, if no voice that matches the fifth intention is received in a second time period, the electronic device may cancel the first prompt, and keep the voice assistant in the sleep state.

The first prompt may display, on a user interface of the electronic device, text information corresponding to the fifth intention. That the electronic device cancels the first prompt may be canceling displaying, on the user interface, the text information corresponding to the fifth intention. Alternatively, the first prompt may be prompting, through voice broadcast, the user to speak the voice that matches the fifth intention. That the electronic device cancels the first prompt may be stopping voice broadcast and prompting the user to speak the voice that matches the fifth intention.

The second time period may be a period of time in which a moment at which the electronic device provides the first prompt is a start moment and whose duration is preset duration.

It may be learned that after speaking the fifth voice that matches the fourth intention in the second list, the user does not speak the more direct and doubtless voice instruction at the first prompt. In this case, the user may not intend to deliver the voice instruction when speaking the fifth voice (for example, may speak the fifth voice when chatting with another person). In this case, the electronic device may keep the voice assistant in the sleep state. In the foregoing embodiment, when the voice assistant is not woken up, the case in which the error response to the voice of the non-voice instruction spoken by the user is made may be reduced, and the first prompt does not cause excessive interference to the user. This may improve voice interaction experience of the user.

With reference to the first aspect, in some embodiments, the first list includes a sixth intention. When determining that a recognition error rate of the sixth intention is greater than a first threshold, the electronic device may remove the sixth intention from the first list, and add the sixth intention to the second list.

It may be learned that after the sixth intention with a high recognition error rate is moved from the first list to the second list, when detecting a voice that matches the sixth intention, the electronic device may first confirm with the user whether to deliver the voice instruction. When confirming that the user delivers the voice instruction, the electronic device may perform an operation corresponding to the sixth intention. According to the foregoing method, in a scenario in which the voice instruction is delivered without waking up the voice assistant, a case of false recognition caused because the voice of the non-voice instruction is used as the voice instruction may be reduced, and use experience of performing voice interaction between the user and the electronic device may be improved.

According to a second aspect, this application provides a voice interaction method. The method is applied to an electronic device. The electronic device includes a voice assistant. The electronic device may receive a first voice when the voice assistant is in a sleep state. The electronic device may provide a first prompt in response to the first voice, where the first prompt is for prompting a user to speak a first instruction. The electronic device may receive a second voice, determine that the second voice matches the first instruction, and perform an operation corresponding to the first instruction.

It may be learned from the foregoing method that, when the voice assistant is not woken up, the electronic device may detect in real time whether a voice spoken by the user is associated with a preset instruction; and when the voice spoken by the user is associated with the preset instruction, prompt the user to speak the preset instruction, to perform an operation corresponding to the preset instruction. In other words, in the foregoing method, the user may directly deliver a voice instruction to the electronic device without first waking up the voice assistant. This may improve voice interaction experience of the user.

With reference to the second aspect, in some embodiments, neither the first voice nor the second voice includes a wake-up word used to wake up the voice assistant.

With reference to the second aspect, in some embodiments, the first prompt may be displaying, on a user interface of the electronic device, text information corresponding to the first instruction. Alternatively, the first prompt may be prompting, through voice broadcast, the user to speak the voice that matches the first instruction.

With reference to the second aspect, in some embodiments, the electronic device may include a first voice recognition model and a second voice recognition model. A size of the second voice recognition model is greater than a size of the first voice recognition model. The size of the first voice recognition model and the size of the second voice recognition model may be sizes of storage space required by the voice recognition models. A larger size of the voice recognition model may indicate higher computing power of the voice recognition model. The computing power may represent a capability of processing and computing data by the voice recognition model. That is, computing power of the second voice recognition model is higher than computing power of the first voice recognition model. Lower computing power of the voice recognition model indicates lower power consumption of the voice recognition model and fewer computing resources that are required. In other words, under a same running condition, power consumption of the second voice recognition model is higher than power consumption of the first voice recognition model. Computing resources required by the second voice recognition model are greater than computing resources required by the first voice recognition model. Lower computing power of the voice recognition model indicates that a quantity of parameters used by the voice recognition model may be smaller. That is, a quantity of parameters used by the second voice recognition model is greater than a quantity of parameters used by the first voice recognition model.

When the voice assistant is in the sleep state, the electronic device may run the first voice recognition model in real time.

When the voice assistant is woken up, the electronic device may run the second voice recognition model when the voice assistant is in a wake-up state.

With reference to the second aspect, in some embodiments, the method for providing the first prompt in response to the first voice may be specifically: In response to the first voice, the electronic device may determine, by using the first voice recognition model, that the first voice is associated with the first instruction. The electronic device may provide the first prompt based on an association relationship between the first voice and the first instruction.

The electronic device may store a first list. The first list may be an execution intention list in this application. The first list may include an intention corresponding to one or more voice instructions. The intention included in the first list may be referred to as an execution intention. The first list may include an intention corresponding to a commonly used voice instruction of the user. The commonly used voice instruction may include a voice instruction with a high frequency of use, a low recognition error rate, and no ambiguity. The recognition error rate may be a probability that a voice that is spoken by the user and that does not include a voice instruction is incorrectly recognized as a voice instruction. In this way, it may be convenient for the user to directly deliver the commonly used voice instruction to control the electronic device to perform a corresponding operation without performing the wake-up operation.

The first list may correspond to a first sentence pattern list and a first entity list, the first sentence pattern list includes one or more sentence patterns, the first entity list includes one or more entities, and the one or more intentions in the first list include a sentence pattern in the first sentence pattern list and an entity in the first entity list.

In a possible implementation, the intention corresponding to the first instruction includes a first sentence pattern and a first entity. That the first voice is associated with the first instruction may mean that a sentence pattern of the first voice is the first sentence pattern, and an entity of the first voice is the first entity. The first sentence pattern list includes the first sentence pattern. The first entity list does not include the first entity. When the voice assistant is in the sleep state, the electronic device may determine, by using the first voice recognition model, that the sentence pattern of the first voice matches the first sentence pattern in the first sentence pattern list, and that there is no entity that matches the first entity of the first voice in the first entity list. Then, the electronic device may provide the first prompt. The first prompt may be prompting, through voice broadcast, the user to speak the voice that matches the first instruction. The voice that matches the first instruction is the first voice. In other words, the first prompt may be for prompting to repeat the first voice.

Further, the electronic device may further add the first entity to the first entity list. In this way, in a process of performing voice interaction, the electronic device may further adjust the first entity list through self-learning, so that the first entity list includes more entities commonly used by the user, and the intention included in the first list is closer to the commonly used voice instruction of the user, to improve use experience of performing voice interaction between the user and the electronic device.

For example, the first voice spoken by the user is "play a song 2". The first sentence pattern of the first voice is "play [song name]". The first entity of the first voice is "song 2". The first sentence pattern list includes the first sentence pattern. The first entity list does not include the first entity. When receiving the first voice, the electronic device may determine that the first voice hits the sentence pattern (namely, the first sentence pattern) in the first sentence pattern list, and does not hit the entity in the first entity list. The electronic device may provide the first prompt to prompt the user to repeat the first voice (namely, the first instruction). For example, the electronic device may perform voice broadcast "I did not catch it, please say it again". The user may speak the second voice "play a song 2" based on the first prompt. The second voice is a repetition of the first voice. In response to the second voice, the electronic device may play the song 2.

It may be learned from the foregoing embodiment that, even if the voice spoken by the user does not match the intention currently included in the first list when the user delivers the voice instruction, the electronic device may still respond to the voice, to perform the operation corresponding to the voice instruction delivered by the user. The foregoing method may better provide full-time wake-up-free voice interaction experience for the user.

The electronic device may store a second list. The second list may be an extension intention list in this embodiment of this application. An intention in the second list may be referred to as an extension intention. The intention in the second list may be associated with one or more intentions in the first list. The second list may include an intention corresponding to a voice that is not direct and has a high recognition error rate and that is spoken by the user when the user expresses the commonly used voice instruction.

In another possible implementation, when the voice assistant is in the sleep state, the electronic device may determine, by using the first voice recognition model, that the first voice matches a first extension intention in the second list. The first extension intention is associated with a first execution intention in the first list. The first execution intention is an intention corresponding to the first instruction. That the first voice is associated with the first instruction may mean that the first voice matches the first extension intention. Then, the electronic device may provide the first prompt to prompt the user to speak the voice corresponding to the first execution intention (namely, the first instruction).

For example, the first voice spoken by the user is "I am so hot". The first extension intention included in the second list is "I am so hot". The first extension intention is associated with the first execution intention "turn on an air conditioner" in the first list. The electronic device may determine that the first voice matches the first extension intention. The electronic device may provide the first prompt to prompt the user to speak the first execution intention "turn on an air conditioner". For example, the electronic device may display on a screen: you can say "turn on an air conditioner" to me. If the user wants to turn on the air conditioner, the user may speak the second voice "turn on an air conditioner" based on the first prompt. If the user does not want to turn on the air conditioner, the user may ignore the first prompt. If the electronic device receives, after the first prompt is provided, the second voice that matches the first extension intention, the electronic device may respond to the second voice and turn on the air conditioner.

It may be learned that, in the foregoing embodiment, when the voice assistant is not woken up, the voice instruction that may be delivered by the user is not missed for recognition, and an error response to a voice of a non-voice instruction that is spoken by the user is not made, thereby improving voice interaction experience of the user.

With reference to the second aspect, in some embodiments, when recognizing that the first voice matches the first extension intention in the second list, the electronic device may keep the voice assistant in the wake-up state. When receiving the second voice, the electronic device may determine, by using the first voice recognition model, that the second voice matches the first instruction (namely, the first execution intention associated with the first extension intention). Then, in response to the second voice, the electronic device may perform the operation corresponding to the first instruction.

In addition, when determining that the second voice matches the first instruction, the electronic device may further wake up the voice assistant, so that the user further delivers more voice instructions to the electronic device, to perform a plurality of rounds of voice interaction with the electronic device without performing the wake-up operation.

For example, when the voice assistant is in a wake-up state, the electronic device receives a third voice, recognizes a second instruction in the third voice by using the second voice recognition model, and performs an operation corresponding to the second instruction.

With reference to the second aspect, in some embodiments, when recognizing that the first voice hits a sentence pattern in the first sentence pattern list but does not hit an entity in the first entity list, the electronic device may wake up the voice assistant. When the voice assistant is in the wake-up state, the electronic device receives the second voice, and recognizes the first instruction in the second voice by using the second voice recognition model. Because the electronic device wakes up the voice assistant, when the user does not perform the wake-up operation, the user may continue to deliver more voice instructions to the electronic device, to perform a plurality of rounds of voice interaction with the electronic device.

With reference to the second aspect, in some embodiments, after the voice assistant is woken up, the electronic device may further switch the voice assistant from the wake-up state to the sleep state when no voice is received in a first time period.

The first time period may be a period of time in which a moment at which the electronic device receives the voice for the last time is a start moment and whose duration is preset duration (for example, 5 seconds or 10 seconds) when the voice assistant is in the wake-up state. Alternatively, the first time period may be a period of time in which a moment at which the electronic device recognizes the voice instruction from the received voice for the last time is a start moment and whose duration is preset duration when the voice assistant is in the wake-up state. Alternatively, the first time period may be a period of time in which a moment at which the electronic device performs a corresponding operation in response to the received voice instruction for the last time is a start moment and whose duration is preset duration when the voice assistant is in the wake-up state.

In the foregoing embodiment, when the user does not deliver the voice instruction after the voice assistant is woken up, power consumption of the high computing power voice recognition model that is run by the electronic device for a long time may be avoided from being excessively high, thereby reducing power consumption of the electronic device.

With reference to the second aspect, in some embodiments, when the voice assistant is in the sleep state, the electronic device receives a fourth voice. The electronic device may determine that the fourth voice matches a third instruction, and perform an operation corresponding to the third instruction.

The third instruction is a voice instruction corresponding to a second execution intention in the first list. The electronic device may determine, by using the first voice recognition model, that the fourth voice matches the third instruction (namely, the second execution intention). Then, the electronic device may perform the operation corresponding to the third instruction.

It may be learned from the foregoing method that, when the voice assistant is not woken up, the electronic device may detect, in real time, whether the voice spoken by the user matches the intention in the first list. When detecting that the voice spoken by the user matches the intention in the first list, the electronic device may directly perform the operation corresponding to the intention. The first list includes the intention corresponding to the voice instruction. In other words, the user may directly deliver, to the electronic device, the voice instruction corresponding to the intention in the first list, without first waking up the voice assistant. This may provide voice interaction experience for the user.

According to a third aspect, this application provides an electronic device. The electronic device may include a microphone, a memory, and one or more processors, the microphone may be configured to collect a voice, the memory may be configured to store a computer program, and the one or more processors may be configured to invoke the computer program, so that the electronic device performs the method according to any one of the possible implementations of the first aspect or the second aspect.

According to a fourth aspect, this application provides a computer-readable storage medium. The computer-readable storage medium includes instructions. When the instructions are run on an electronic device, the electronic device is enabled to perform the method according to any one of the possible implementations of the first aspect or the second aspect.

According to a fifth aspect, this application provides a computer program product. The computer program product may include computer instructions. When the computer instructions are run on an electronic device, the electronic device is enabled to perform the method according to any one of the possible implementations of the first aspect or the second aspect.

According to a sixth aspect, this application provides a chip. The chip is applied to an electronic device, the chip includes one or more processors, and the processor is configured to invoke computer instructions, so that the electronic device performs the method according to any one of the possible implementations of the first aspect or the second aspect.

It may be understood that the electronic device provided in the third aspect, the computer-readable storage medium provided in the fourth aspect, the computer program product provided in the fifth aspect, and the chip provided in the sixth aspect are all configured to perform the method provided in embodiments of this application. Therefore, for beneficial effect that can be achieved by the method, refer to beneficial effect in the corresponding method. Details are not described herein again.

### BRIEF DESCRIPTION OF DRAWINGS

FIG. 1 is a diagram of a structure of an electronic device 100 according to an embodiment of this application;
FIG. 2 is a block diagram of a software structure of an electronic device 100 according to an embodiment of this application;
FIG. 3 is a framework diagram of a voice interaction system 30 according to an embodiment of this application;
FIG. 4A to FIG. 4C are diagrams of some voice interaction scenarios according to an embodiment of this application;
FIG. 5A and FIG. 5B are diagrams of some other voice interaction scenarios according to an embodiment of this application;
FIG. 6A and FIG. 6B are a flowchart of a voice interaction method according to an embodiment of this application;
FIG. 7A and FIG. 7B are diagrams of some other voice interaction scenarios according to an embodiment of this application;
FIG. 8A and FIG. 8B are a diagram of a method for adjusting an execution intention list according to an embodiment of this application; and
FIG. 9 is a diagram of a method for adjusting an execution intention list according to an embodiment of this application.

### DESCRIPTION OF EMBODIMENTS

The following describes technical solutions in embodiments of this application with reference to the accompanying drawings in embodiments of this application. In descriptions of embodiments of this application, terms used in the following embodiments are merely intended to describe purposes of specific embodiments, but are not intended to limit this application. The terms "a", "the", "the foregoing", "this", and "the one" of singular forms used in this specification and the appended claims of this application are also intended to include forms such as "one or more", unless otherwise specified in the context clearly. It should be further understood that in the following embodiments of this application, "at least one" and "one or more" mean one or more than two (including two). The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes a direct connection and an indirect connection, unless otherwise specified. "First" and "second" are merely intended for a purpose of description, and shall not be understood as an indication or implication of relative importance or implicit indication of the number of indicated technical features.

In embodiments of this application, the word "example", "for example", or the like is used to represent giving an example, an illustration, or a description. Any embodiment or design scheme described as "example" or "for example" in embodiments of this application should not be explained as having more advantages than another embodiment or design scheme. Exactly, use of the word "example", "for example", or the like is intended to present a relative concept in a specific manner.

The term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphic user interface (graphic user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a widget that is displayed on a display of the electronic device.

In some embodiments, the electronic device may implement a voice interaction solution of "one-time wake-up, continuous dialogue". Specifically, the electronic device may detect in real time whether a collected sound includes a wake-up word. When detecting the wake-up word, the electronic device may wake up a voice assistant, and perform, by using the voice assistant, intention recognition and action execution on a voice collected after the wake-up word. For example, after the user speaks the wake-up word "Celia, Celia", the user further speaks a voice instruction "play music". After detecting the wake-up word, the electronic device may wake up the voice assistant to recognize the voice instruction. When recognizing that an intention corresponding to the voice instruction is to play music, the electronic device may play music.

The voice assistant is a voice interaction application. The voice assistant may also be referred to as a name such as a voice recognition application. This is not limited in embodiments of this application.

The voice instruction may be a voice used to control the electronic device to perform one or more operations.

After waking up the voice assistant, the electronic device may continuously detect a human voice in an environment by using the voice assistant, and perform intention recognition and action execution. When no human voice is detected in a preset time period, the electronic device may enable the voice assistant to exit a wake-up state. After the voice assistant exits the wake-up state, the voice assistant needs to respond to a wake-up operation again to be waken up. The wake-up operation of waking up the voice assistant may include waking up by using a wake-up word, waking up by using a physical button or a virtual button on the electronic device, or the like. The foregoing wake-up operation used to wake up the voice assistant is not limited in embodiments of this application.

In other words, after waking up the voice assistant by using the wake-up word, the user may continuously deliver a plurality of voice instructions to the electronic device. The electronic device may recognize the plurality of voice instructions, and perform operations corresponding to the plurality of voice instructions. In a period in which the user continuously delivers the plurality of voice instructions, the user does not need to speak the wake-up word before delivering each voice instruction. After the user no longer makes a sound in the preset time period, if the user wants to control the electronic device by using the voice instruction again, the user needs to speak the wake-up word again to wake up the voice assistant.

It may be learned that after waking up the voice assistant, the user may have a continuous dialogue with the electronic device, to implement a plurality of rounds of voice interaction with the electronic device. This may improve smoothness of voice interaction between the user and the electronic device. However, after the continuous dialogue times out, the user still needs to wake up the voice assistant, and then perform voice interaction with the electronic device. The user still cannot control the electronic device through voice at any time without speaking the wake-up word or performing another wake-up operation. Consequently, user experience of using a voice interaction function is poor.

In some other embodiments, the electronic device may store one or more fixed command words, for example, pause playing, continue playing, previous song, next song, previous episode, and next episode. When detecting a voice matching the fixed command word, the electronic device may perform an operation corresponding to the fixed command word. For example, the electronic device is playing music. When detecting the voice "pause playing", the electronic device may determine that the voice matches the fixed command word "pause playing". In this case, the electronic device may pause playing music currently being played. In this way, the user may deliver the voice instruction to control the electronic device without performing the wake-up operation.

However, in the foregoing embodiment, the fixed command word stored in the electronic device is usually limited. The fixed command word is usually used only in a specified scenario, for example, a video playing scenario or a music playing scenario. When the voice instruction delivered by the user does not match the fixed command word, the electronic device cannot respond to the voice instruction of the user when the voice assistant is not woken up. In other words, when delivering the voice instruction beyond coverage of the fixed command word, the user still needs to first wake up the voice assistant.

This application provides a voice interaction method. During implementation of the method, a user may deliver a voice instruction at any time to instruct an electronic device to perform a corresponding operation without waking up a voice assistant. The electronic device may store an execution intention list. The execution intention list may include an intention corresponding to a commonly used voice instruction of the user. The electronic device may run a low computing power voice recognition model when the voice assistant is not woken up, to detect whether a received voice matches an intention in the execution intention list. When detecting that the received voice matches the intention in the execution intention list, the electronic device may perform an operation corresponding to the intention that matches the voice. In addition, the electronic device may further wake up the voice assistant to run a high computing power voice recognition model, to respond to a voice instruction subsequently delivered by the user. When detecting that the received voice does not match the intention in the execution intention list, the electronic device may continue to run the low computing power voice recognition model without waking up the voice assistant.

It may be learned from the foregoing method that, when the voice assistant is not woken up, the electronic device may run the low computing power voice recognition model in real time to detect whether the user speaks the commonly used voice instruction. When detecting that the user speaks the commonly used voice instruction, the electronic device may directly perform an operation corresponding to the commonly used voice instruction. In other words, the user may directly deliver some commonly used voice instructions to the electronic device without first waking up the voice assistant. In addition, after delivering the commonly used voice instructions, the user may further deliver more voice instructions to the electronic device, to perform a plurality of rounds of voice interaction with the electronic device without performing a wake-up operation.

In some embodiments, the electronic device may further store an extension intention list. The extension intention list may include an intention corresponding to a voice that is not direct and has a high recognition error rate and that is spoken by the user when the user expresses the commonly used voice instruction. Any intention in the extension intention list may be associated with one or more intentions in the execution intention list. An intention in the extension intention list may be referred to as an extension intention. An intention in the execution intention list may be referred to as an execution intention. For example, the extension intention list includes an extension intention "I am so hot". The execution intention list includes an execution intention "turn on an air conditioner". The extension intention "I am so hot" may be associated with the execution intention "turn on an air conditioner". When detecting that the received voice does not match the execution intention, the electronic device may detect whether the received voice matches the extension intention. When detecting that the received voice matches the extension intention, the electronic device may prompt the user to speak the execution intention associated with the matched extension intention, to confirm whether the user delivers the voice instruction. Further, when receiving the voice that matches the execution intention, the electronic device may perform the operation corresponding to the execution intention, and wake up the voice assistant.

It may be learned that, in a case in which the voice assistant is not woken up, in addition to responding to a direct and doubtless commonly used voice instruction delivered by the user, the electronic device may further analyze, by using the extension intention list, a voice that may be doubtful and that is spoken by the user, and determine whether the user wants to deliver the voice instruction. After determining that the user wants to deliver the voice instruction, the electronic device may perform the operation corresponding to the voice instruction that the user wants to deliver. In the foregoing embodiment, a recognition rate of recognizing the voice instruction of the user when the voice assistant is not woken up may be improved, thereby improving use experience of controlling the electronic device by the user through voice in a full-time wake-up-free scenario. Full-time wake-up-free described above means that the user does not need to first perform the wake-up operation of waking up the voice assistant when delivering the voice instruction at any moment.

The low computing power voice recognition model has a low computing power level and low power consumption. When the electronic device runs the low computing power voice recognition model in real time without waking up the voice assistant, usually no excessively high power consumption is generated, and problems such as heating and running freezing of the electronic device are not caused. According to the voice interaction method provided in this application, power consumption of the electronic device may be reduced on a basis of implementation of full-time wake-up-free.

For ease of understanding, the following describes some concepts in this application.

### 1. Low computing power voice recognition model and high computing power voice recognition model

Both the low computing power voice recognition model and the high computing power voice recognition model may be used to perform voice recognition, so that the electronic device performs the operation corresponding to the voice instruction after recognizing the voice instruction, to complete voice interaction with the user.

Computing power of the low computing power voice recognition model is lower than computing power of the high computing power voice recognition model. The foregoing computing power may be a capability of processing and computing data by the voice recognition model. Complexity of voice recognition performed by the electronic device by using the low computing power voice recognition model is lower than complexity of voice recognition performed by using the high computing power voice recognition model. Because the computing power is low, a recognition rate of voice recognition performed by the electronic device by using the low computing power voice recognition model is lower than a recognition rate of voice recognition performed by using the high computing power voice recognition model. In addition, under a same condition, power consumption generated when the electronic device runs the low computing power voice recognition model is less than power consumption generated when the electronic device runs the high computing power voice recognition model. That is, the low computing power voice recognition model is a low power consumption voice recognition model. The high computing power voice recognition model is a high power consumption voice recognition model. A size of the low computing power voice recognition model is usually less than that of the high computing power voice recognition model. That is, the high computing power voice recognition model needs to occupy more storage space in the electronic device.

It may be understood that the low computing power and the high computing power represent relative concepts, and do not constitute a specific limitation on a computing capability of the voice recognition model in this application. In some embodiments, the voice recognition models may be further classified into voice recognition models of more computing power levels based on different computing power values. Usually, higher computing power of the voice recognition model indicates higher power consumption of the voice recognition model.

In a possible implementation, both the low computing power voice recognition model and the high computing power voice recognition model are neural network-based models. A neural network may include an input layer, a hidden layer, and an output layer, and each layer has one or more nodes. In comparison with the high computing power voice recognition model, the low computing power voice recognition model has fewer layers of hidden layers and/or fewer nodes at hidden layers.

In this application, the electronic device may detect, by using the low computing power voice recognition model, whether a voice of the user matches a preset intention, and perform, when the intention matches, an operation corresponding to the matched intention. The electronic device may recognize the intention in the voice of the user by using the high computing power voice recognition model, and determine whether the user delivers the voice instruction, to implement voice interaction.

In some embodiments, the low computing power voice recognition model may be deployed on a device side, namely, the electronic device. The high computing power voice recognition model may be deployed on a device side, or may be deployed on a cloud side, namely, a cloud server. For example, all processes of voice interaction may be completed on the electronic device. After the electronic device wakes up the voice assistant, the electronic device may perform voice recognition by using a local high computing power voice recognition model, to perform voice interaction. For another example, voice interaction may be completed by using a device-cloud combination solution. When the voice assistant is not woken up, the electronic device may perform voice recognition by using the local low computing power voice recognition model, to perform voice interaction. After the electronic device wakes up the voice assistant, the electronic device may communicate with the cloud server, and perform voice recognition by using the high computing power voice recognition model on the cloud server, to perform voice interaction.

### 2. Execution intention list

The execution intention list may include an intention corresponding to a commonly used voice instruction of the user. The intention may represent what the user wants to do. An intention, corresponding to a segment of voice, that is recognized based on the segment of voice spoken by the user may indicate what the user wants to do by speaking the segment of voice. For example, the user speaks "turn on an air conditioner", and the intention of the user is to hope that the electronic device can turn on the air conditioner. After recognizing the intention of the user to speak "turn on an air conditioner", the electronic device may turn on the air conditioner.

The electronic device may quickly respond, based on the execution intention list when the voice assistant is not woken up, to the commonly used voice instruction spoken by the user. The commonly used voice instruction may include a voice instruction with a high frequency of use, a low recognition error rate, and no ambiguity. The recognition error rate may be a probability that a voice that is spoken by the user and that does not include a voice instruction is incorrectly recognized as a voice instruction.

For example, in a scenario in which the electronic device is a vehicle-mounted computer, the user may often instruct, by using the voice instruction, the vehicle-mounted computer to open/close a vehicle window, turn on/off an air conditioner, play music, adjust a volume, perform navigation, and the like. In this case, the commonly used voice instruction may include: open a vehicle window, close a vehicle window, turn on an air conditioner, turn off an air conditioner, play a song 1, play a song of a singer 1, turn up a system volume, navigate to a place 1, and the like. For the execution intention list that includes the intention corresponding to the foregoing commonly used voice instruction, refer to the following Table 1:

**Table 1**

| |
|---|
| Open a vehicle window |
| Close a vehicle window |
| Turn on an air conditioner |
| Turn off an air conditioner |
| Turn up a system volume |
| Play a song 1 |
| Play a song of a singer 1 |
| Navigate to a place 1 |

Table 1 is merely an example of the execution intention list in embodiments of this application for description, and should not constitute a limitation on the execution intention list. The execution intention list may further include more or fewer intentions. In some embodiments, intentions in the execution intention list may be further classified based on application scenarios. For example, the intentions may be classified into a vehicle control category, a setting category, a music category, a navigation category, and the like based on the application scenarios. "Open a vehicle window", "close a vehicle window", "turn on an air conditioner", and "turn off an air conditioner" in Table 1 may belong to intentions of a vehicle control category. "Turn up a system volume" may be an intention of a setting category. "Play a song 1" and "play a song of a singer 1" are intentions of a music category. "Navigate to a place 1" may be an intention of a navigation category. Categories of the foregoing intentions classified based on the application scenarios are not limited in embodiments of this application. In a possible implementation, during intention recognition, the electronic device may first recognize, by using the voice recognition model (for example, the low computing power voice recognition model or the high computing power voice recognition model), a specific category of intention corresponding to a received voice, and then determine a meaning expressed by the voice based on a keyword in the voice.

It may be learned that the foregoing commonly used voice instruction (namely, the voice instruction that matches the execution intention) is usually doubtless, and can clearly instruct the electronic device to perform the operation. The foregoing commonly used voice instruction may also be referred to as a high frequency voice instruction.

In some embodiments, intentions in the execution intention list may be classified into an intention with an entity and an intention without an entity on a basis of whether the intention has an entity.

An entity may be a specific instance of a category of things. For example, the category of things corresponding to the entity may include one or more of the following: a song name, a singer name, a place name, a movie name, a TV series name, a book name, a train number, a flight number, a phone number, an email address, and the like. For example, specific instances of the song name may include a song 1, a song 2, a song 3, and the like. Specific instances of the singer name may include a singer 1, a singer 2, a singer 3, and the like. A specific instance of a category of things includes a large scope, and may include several to several million entities. The category of things corresponding to the foregoing entity is not limited in embodiments of this application. The category of things corresponding to the foregoing entity may also be referred to as an entity category.

The intention with an entity is an intention that includes an entity. The intention with an entity may include a sentence pattern and an entity. The sentence pattern may include a main structure and an entity placeholder of the sentence pattern. The entity placeholder is used to determine a location used to place an entity in the sentence pattern. A sentence pattern of the intention with an entity may support placing any entity of a same category of things at a location of the entity placeholder.

For example, "play a song of a singer 1" is an intention with an entity. A sentence pattern of the intention with an entity may be "play a song of [singer name]". "Play a song of..." is a main structure of the sentence pattern. "[Singer name]" is an entity placeholder of the sentence pattern. The entity placeholder is located between "play" and "song of" in the main structure of the sentence pattern. The sentence pattern of the intention with an entity may support placing any entity of the category of things of the singer name at a location of the entity placeholder. For example, if "singer 2" is placed at the location of the entity placeholder, the intention with an entity is "play a song of a singer 2". If "singer 3" is placed at the location of the entity placeholder, the intention with an entity is "play a song of a singer 3".

Because the intention with an entity may include the sentence pattern and the entity, the execution intention list may correspond to a sentence pattern list and an entity list. The sentence pattern list may include the sentence pattern of the intention with an entity in the execution intention list. The entity list may include the entity of the intention with an entity in the execution intention list. Entities in the entity list may be classified based on categories of things corresponding to the entities, for example, an entity of a song name category, an entity of a singer name category, and an entity of a place name category.

It may be learned that "play a song 1 ", "play a song of a singer 1", and "navigate to a place 1" in Table 1 are all intentions with entities. For the sentence pattern list corresponding to Table 1, refer to the following Table 2:

**Table 2**

| |
|---|
| Play [song name] |
| Play a song of [singer name] |
| Navigate to [place name] |

For the entity list corresponding to Table 1, refer to the following Table 3:

**Table 3**

| | |
|---|---|
| Song name | Song 1 |
| Singer name | Singer 1 |
| Place name | Place 1 |

The intention without an entity is an intention that does not include an entity. In the execution intention list, all intentions except the intention with an entity are intentions without entities. It may be learned that "open a vehicle window", "close a vehicle window", "turn on an air conditioner", "turn off an air conditioner", and "turn up a system volume" in Table 1 are all intentions without entities.

In some embodiments, the execution intention list may be preset. For example, when installing the voice assistant, in addition to obtaining and storing the low computing power voice recognition model, the electronic device may further obtain and store the preset execution intention list. Optionally, in a process of performing voice interaction, the electronic device may further adjust the execution intention list through self-learning, so that the intention included in the execution intention list is closer to the commonly used voice instruction of the user, to improve use experience of performing voice interaction between the user and the electronic device. An implementation process of adjusting the execution intention list by the electronic device through self-learning is described in subsequent embodiments, and is not described herein. Optionally, the electronic device may further receive an operation of adjusting the execution intention list by the user, to adjust the execution intention list.

The execution intention list may also be referred to as a first list. A name of the execution intention list is not limited in embodiments of this application.

### 3. Extension intention list

The extension intention list may include an intention corresponding to a voice that is not direct and has a high recognition error rate and that is spoken by the user when the user expresses the commonly used voice instruction. Any extension intention in the extension intention list may be associated with one or more execution intentions in the execution intention list.

It may be understood that the voice that matches the execution intention in the execution intention list is direct and doubtless. After receiving the foregoing voice that matches the execution intention, the electronic device may clearly determine what the user wants to do. In an actual voice interaction scenario, when delivering the voice instruction to the electronic device, the user may also speak a voice that is doubtful. The foregoing doubtful voice may mean that after receiving the voice, the electronic device cannot determine whether the user speaks the voice in a scenario in which the user delivers the voice instruction or in a scenario in which the user does not deliver the voice instruction (for example, in a scenario in which the user chats with another person). In other words, the foregoing doubtful voice has a high recognition error rate. If the electronic device directly determines that the foregoing doubtful voice is the voice instruction delivered by the user, and performs the corresponding operation, the user may not deliver the voice instruction, and the electronic device frequently responds to perform voice interaction with the user. Consequently, user experience is poor. However, if the electronic device directly determines that the foregoing doubtful voice is that the user does not deliver the voice instruction, and does not make a response, the user may actually deliver the voice instruction, but the electronic device does not respond for a long time. Consequently, user experience is poor.

For example, the user speaks a voice "I am so hot". In one case, the user is delivering the voice instruction. The user speaks "I am so hot" and expects the electronic device to turn on the air conditioner. In another case, the user does not deliver the voice instruction. The user speaks "I am so hot" in a process in which the user chats with another person. The electronic device recognizes that the received voice is "I am so hot", and may further confirm with the user whether the user wants to deliver the voice instruction.

The electronic device may detect, based on the extension intention list, whether the received voice matches the extension intention in the extension intention list. If the voice spoken by the user matches the extension intention, it indicates that the voice spoken by the user is doubtful. When detecting that the received voice matches the extension intention, the electronic device may confirm, based on the execution intention associated with the extension intention, with the user whether the user wants to implement the execution intention associated with the extension intention. After determining that the user wants to implement the execution intention associated with the extension intention, the electronic device may perform an operation corresponding to the execution intention, and perform voice interaction with the user.

For example, in a scenario in which the electronic device is a vehicle-mounted computer, the user may speak a voice that is doubtful, for example, I am so hot or the volume is too low, in a vehicle. For the extension intention list that includes the intention corresponding to the foregoing doubtful voice, refer to the following Table 4:

**Table 4**

| |
|---|
| I am so hot |
| A volume is too low |

Table 4 is merely an example of the extension intention list in embodiments of this application for description, and should not constitute a limitation on the extension intention list. The extension intention list may further include more or fewer intentions.

Any extension intention in the extension intention list may be associated with one or more execution intentions in the execution intention list. For example, the execution intention list includes the execution intention "turn on an air conditioner". The extension intention "I am so hot" in Table 4 may be associated with the execution intention "turn on an air conditioner". When the electronic device recognizes that the received voice is "I am so hot", the electronic device may prompt the user to speak the execution intention "turn on an air conditioner" associated with "I am so hot". Then, when the electronic device recognizes that the received voice is "turn on an air conditioner", the electronic device may perform the operation corresponding to the execution intention "turn on an air conditioner", that is, turn on the air conditioner. For another example, the execution intention list includes an execution intention "turn up a system volume" and an execution intention "turn up a navigation volume". The extension intention "a volume is too low" in Table 4 may be associated with the execution intention "turn up a system volume", and may be associated with the execution intention "turn up a navigation volume". When the electronic device recognizes that the received voice is "a volume is too low", the electronic device may prompt the user to speak the execution intention associated with "a volume is too low", that is, "turn up a system volume" or "turn up a navigation volume". Then, when the electronic device recognizes that the received voice is "turn up a navigation volume", the electronic device may perform an operation corresponding to the execution intention "turn up a navigation volume", that is, turn up the navigation volume.

In some embodiments, the extension intention list may be preset. For example, when installing the voice assistant, the electronic device may obtain and store the preset extension intention list. Optionally, in a process of performing voice interaction, the electronic device may further adjust the extension intention list through self-learning. For example, the extension intention in the extension intention list is added to the execution intention list, to adjust the extension intention to the execution intention. Optionally, the electronic device may further receive an operation of adjusting the execution intention list by the user, to adjust the execution intention list.

The extension intention list may also be referred to as a second list. A name of the extension intention list is not limited in embodiments of this application.

### 4. Sleep state and wake-up state of the voice assistant

The voice assistant may be an application that is in the electronic device and that is used to implement voice interaction. The voice assistant may be preset in the electronic device when the electronic device is delivered from a factory. Alternatively, the voice assistant may be further installed when the electronic device responds to an operation of installing the voice assistant by the user or when an electronic device system is updated. An implementation method for installing the voice assistant on the electronic device is not limited in embodiments of this application.

When installing the voice assistant, the electronic device may obtain and store the low computing power voice recognition model, the execution intention list, and the extension intention list. Optionally, when installing the voice assistant, the electronic device may further obtain and store the high computing power voice recognition model.

In some embodiments, a status of the voice assistant may include the sleep state and the wake-up state. When the voice assistant is not woken up, the voice assistant may be in the sleep state. When the voice assistant is in the sleep state, the electronic device may run the low computing power voice recognition model to recognize whether the received voice matches the execution intention. When recognizing that the received voice matches the execution intention, the electronic device may perform the operation corresponding to the execution intention, and wake up the voice assistant. When recognizing the intention in the user voice by using the low computing power voice recognition model, the electronic device 100 may use the execution intention list and the extension intention list.

When the voice assistant is woken up, the electronic device may switch the voice assistant from the sleep state to the wake-up state. When the voice assistant is in the wake-up state, the electronic device may run the high computing power voice recognition model to recognize the intention corresponding to the received voice, to perform voice interaction with the user. When recognizing the intention in the user voice by using the high computing power voice recognition model, the electronic device 100 may not use the execution intention list and the extension intention list.

When no human voice or voice instruction is detected in the preset time period, the electronic device may switch the voice assistant from the wake-up state to the sleep state.

It may be learned that the electronic device may run the low computing power voice recognition model when the voice assistant is in the sleep state. The electronic device may run the high computing power voice recognition model when the voice assistant is in the wake-up state. Because power consumption of the low computing power voice recognition model is low, the electronic device continuously runs the low computing power voice recognition model when the voice assistant is not woken up, so that power consumption may be reduced as much as possible, and the user may enjoy full-time wake-up-free experience.

In some embodiments, the sleep state may also be referred to as a first state. The wake-up state may also be referred to as a second state. Names of the sleep state and the wake-up state are not limited in embodiments of this application.

The following describes the electronic device in this application.

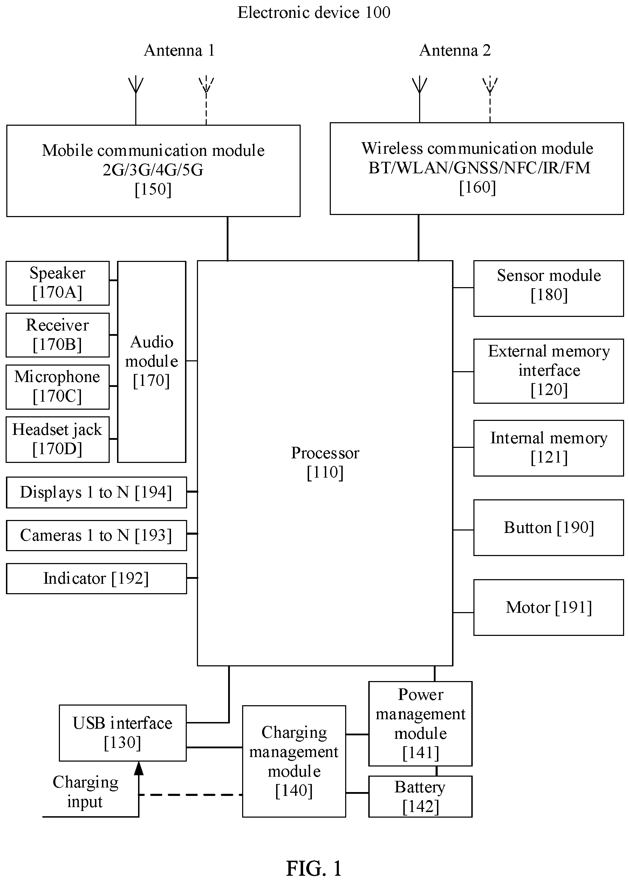

**For example,** **FIG. 1** **is a diagram of a structure of an electronic device 100.**

As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, and the like.

It may be understood that, the structure illustrated in embodiments of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store an instruction and data. In some examples, the memory in the processor 110 is a cache memory. The memory may store instructions or data that have/has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to be connected to the charger to charge the electronic device 100, or may be configured to transmit data between the electronic device 100 and a peripheral device, or may be configured to be connected to a headset to play audio through the headset.

The charging management module 140 is configured to receive a charging input from the charger. The charger may be a wireless charger or a wired charger. The charging management module 140 may further supply power to the electronic device through the power management module 141 while charging the battery 142.

The power management module 141 is configured to be connected to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the electronic device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 implements a display function by using the GPU, the display 194, the application processor, and the like. The GPU is a microprocessor for image processing and is connected to the display 194 and the application processor. The GPU is configured to: perform mathematical and geometric computation, and render an image.

The display 194 is configured to display an image, a video, and the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image.

The camera 193 is configured to capture a still image or a video. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, voice recognition, and text understanding.

The external memory interface 120 may be used to be connected to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required for at least one function (such as a sound playing function and an image display function), and the like. The data storage area may store data (for example, audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some examples, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may be configured to indicate a charging state and a power change, or may be configured to indicate a message, a missed call, a notification, and the like.

The electronic device 100 may be an electronic device that carries iOS^{®}, Androids, Windows^{®}, Harmony^{®} OS (Harmony^{®} OS), or another operating system, for example, a vehicle-mounted computer, a mobile phone, a tablet computer, a notebook computer, a smart watch, or a smart band. A specific type of the electronic device 100 is not limited in embodiments of this application.

A software system of the electronic device 100 may use a layered architecture, an event-driven architecture, a microkernel architecture, a microservice architecture, or a cloud architecture. In an embodiment of this application, an Android^{®} system of a layered architecture is used as an example to illustrate a software structure of the electronic device 100.

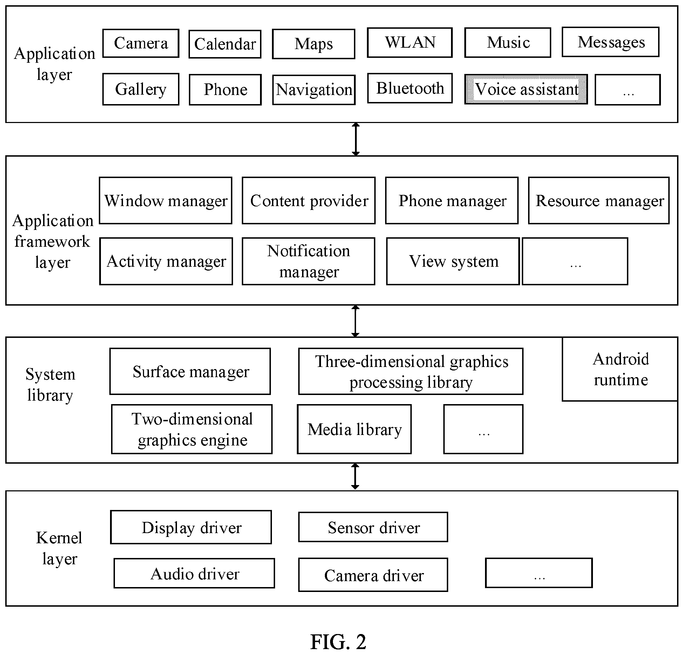

**FIG. 2** **is a block diagram of a software structure of an electronic device 100 according to an embodiment of this application.**

In a layered architecture, software is divided into several layers, and each layer has a clear role and task. The layers communicate with each other through a software interface. In some embodiments, an Android^{®} system is divided into four layers: an application layer, an application framework layer, Android runtime (Android runtime) and a system library, and a kernel layer from top to bottom.

The application layer may include a series of application packages.

As shown in FIG. 2, the application package may include applications such as Camera, Gallery, Calendar, Phone, Maps, Navigation, WLAN, Bluetooth, Music, Messages, and Voice assistant. For the voice assistant, refer to the descriptions of the foregoing embodiments.

The application framework layer provides an API and a programming framework for an application at the application layer. The application framework layer includes some predefined functions.

As shown in FIG. 2, the application framework layer may include a window manager, a content provider, a view system, a phone manager, a resource manager, a notification manager, an activity manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history and a browsing bookmark, an address book, and the like.

The view system includes visual controls such as a control for displaying a text and a control for displaying a picture. The view system may be used to construct an application. A display interface may include one or more views. For example, a display interface including an SMS message notification icon may include a view for displaying a text and a view for displaying a picture.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar (for example, a pull-down notification bar), and may be configured to convey a notification message. The displayed notification information may automatically disappear after a short stay without user interaction. For example, the notification manager is configured to notify download completion, provide a message notification, and the like. The notification manager may alternatively be a notification that appears in a top status bar of the system in a form of a graph or a scroll bar text, for example, a notification of an application running on a background or a notification that appears on a screen in a form of a dialog window. For example, text information is displayed in the status bar, a prompt tone is made, the electronic device vibrates, or the indicator light flashes.

The activity manager is responsible for managing an activity (activity), and is responsible for work such as startup, switching, and scheduling of each component in the system, and management and scheduling of the applications. The activity manager may be invoked by an upper-layer application to open the corresponding activity.

The Android runtime includes a kernel library and a virtual machine. The Android runtime is responsible for scheduling and management of the Android system.

The kernel library includes two parts: a function that needs to be invoked in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and abnormality management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is used to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The voice interaction method provided in this application may be applied to a voice interaction system. The following describes the voice interaction system in this application.

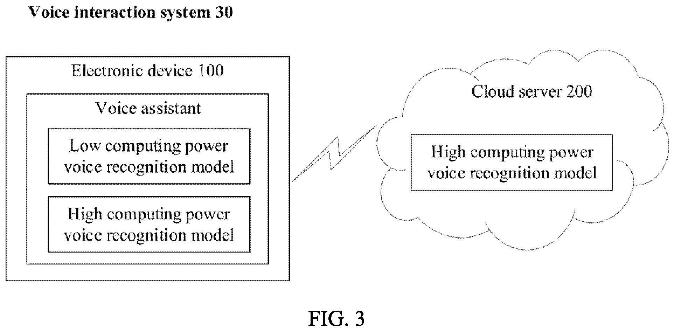

**For example,** **FIG. 3** **is a framework diagram of a voice interaction system 30 according to this application.**

As shown in FIG. 3, the voice interaction system 30 may include an electronic device 100 and a cloud server 200. A communication connection may be established between the electronic device 100 and the cloud server 200. A communication manner between the electronic device 100 and the cloud server 200 is not limited in this embodiment of this application.

The electronic device 100 may include a voice assistant. The voice assistant may include a low computing power voice recognition model and a high computing power voice recognition model. It may be learned from the foregoing embodiment that the voice assistant may further include an execution intention list (not shown in FIG. 3) and an extension intention list (not shown in FIG. 3).

The cloud server 200 may include a high computing power voice recognition model.

In some embodiments, all processes of voice interaction may be completed on the electronic device 100. When the voice assistant is not woken up, the electronic device 100 may run a local low computing power voice recognition model, to quickly respond to a voice instruction delivered by a user. When the voice assistant is woken up, the electronic device 100 may perform voice recognition by using a local high computing power voice recognition model, to perform voice interaction.

In some embodiments, voice interaction may be completed by using a device-cloud combination solution. When the electronic device 100 is connected to a network, the electronic device 100 may communicate with the cloud server 200. For example, when the voice assistant is not woken up, the electronic device 100 may run the local low computing power voice recognition model, to quickly respond to the voice instruction delivered by the user. When the voice assistant is woken up, the electronic device 100 may communicate with the cloud server 200 (for example, send a received voice to the cloud server 200, or receive a voice recognition result from the cloud server 200), and perform voice recognition by using the high computing power voice recognition model on the cloud server 200, to perform voice interaction. For another example, when the voice assistant is woken up, the electronic device 100 may perform voice recognition by using the local high computing power voice recognition model. The electronic device 100 may further communicate with the cloud server 200, and perform voice recognition by using the high computing power voice recognition model on the cloud server 200. The electronic device 100 may use a fastest obtained voice recognition result. Alternatively, the electronic device 100 may determine accuracy of performing voice recognition by using the local high computing power voice recognition model and accuracy of performing voice recognition by using the high computing power voice recognition model on the cloud server 200. The electronic device 100 may use a voice recognition result with higher accuracy. The foregoing method for implementing voice interaction through device-cloud combination is not limited in this embodiment of this application.

In some embodiments, the voice assistant in the electronic device 100 may not include the high computing power voice recognition model. When the voice assistant is woken up, the electronic device 100 may communicate with the cloud server 200, and perform voice recognition by using the high computing power voice recognition model on the cloud server 200, to perform voice interaction.

The voice interaction system 30 shown in FIG. 3 is merely an example for description of this embodiment of this application. The voice interaction system 30 may further include more or fewer modules.

It may be learned from the foregoing voice interaction system 30 that, when the voice assistant is not woken up, the electronic device 100 may locally run the low computing power voice recognition model in real time, to provide the user with wake-up-free experience that the voice instruction may be delivered without waking up the voice assistant. Because power consumption of the low computing power voice recognition model is low, the electronic device 100 runs the low computing power voice recognition model for a long time, which has little impact on power consumption of the electronic device 100. When the voice assistant is in a wake-up state, the electronic device 100 may perform voice recognition by using the local high computing power voice recognition model, or may perform voice recognition by using the high computing power voice recognition model on the cloud server 200, so that the user enjoys experience of performing a plurality of rounds of voice interaction with the electronic device 100 without performing a wake-up operation.

In subsequent embodiments of this application, an example in which the electronic device 100 is a vehicle-mounted computer is used to describe a voice interaction method in a vehicle-mounted scenario. In addition to the vehicle-mounted scenario, the voice interaction method provided in this application is further applicable to other scenarios.

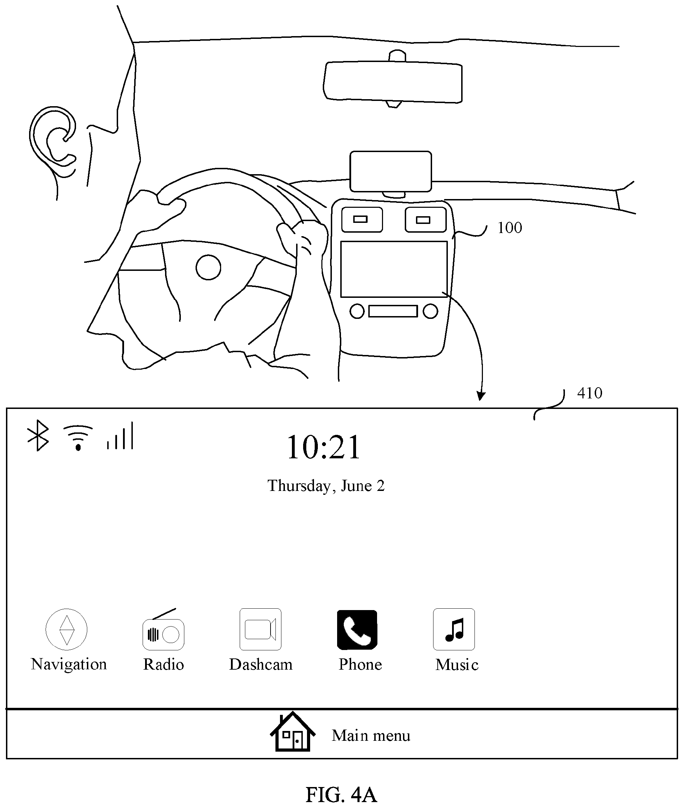

**FIG. 4A to FIG. 4C** **show an example of a wake-up-free voice interaction scenario according to an embodiment of this application.**

As shown in FIG. 4A, in a vehicle-mounted scenario, a voice assistant in an electronic device 100 may be in a sleep state. The electronic device 100 may display a user interface 410 shown in FIG. 4A. The user interface 410 may be a desktop of the electronic device 100. The user interface 410 may display interface elements such as an application icon (for example, a navigation application icon, a radio application icon, and a music application icon) and a time control. Content displayed on the user interface 410 is not limited in this embodiment of this application.

When the voice assistant is in the sleep state, the electronic device 100 may run a low computing power voice recognition model to recognize whether a detected voice matches an execution intention in an execution intention list.

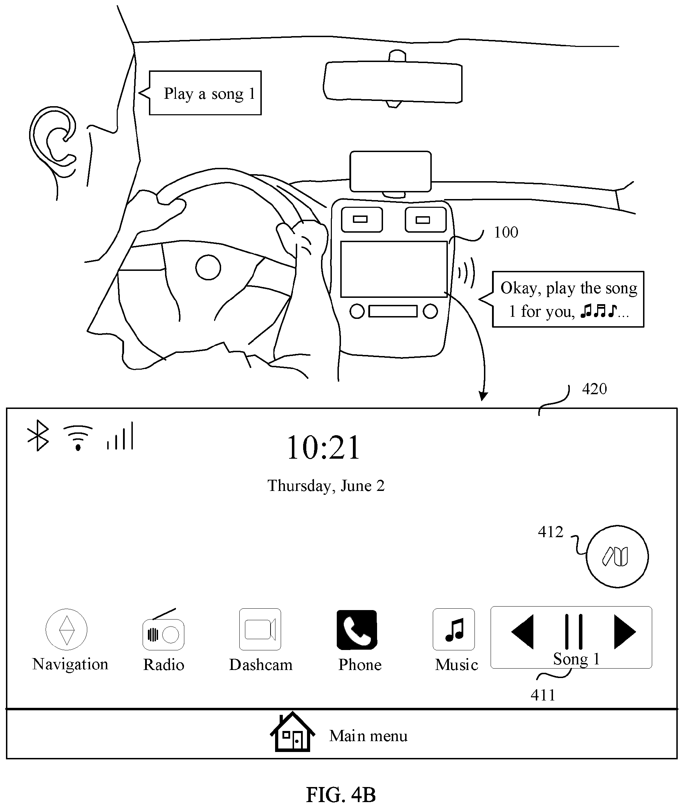

As shown in FIG. 4B, a user delivers a voice instruction "play a song 1" to the electronic device 100 in a vehicle. The execution intention list stored in the electronic device 100 includes an execution intention "play a song 1". The electronic device 100 may detect a voice "play a song 1" in an environment. The electronic device 100 may recognize, by using the low computing power voice recognition model, that the voice matches the execution intention "play a song 1". Then, the electronic device 100 may perform an operation corresponding to the execution intention, that is, invoke a music application to play the song 1. In addition, the electronic device 100 may further wake up the voice assistant, to switch the voice assistant from the sleep state to a wake-up state.

For example, when recognizing that the detected voice matches the execution intention, the electronic device 100 may perform voice broadcast "okay, play the song 1 for you", and start to play the song 1. The electronic device 100 may display a user interface 420 shown in FIG. 4B. The user interface 420 may include a song playing component 411 and a wake-up identifier 412. The song playing component 411 may be configured to indicate the song that is currently being played by the electronic device 100. For example, if a song name "song 1" is displayed in the song playing component 411, it may indicate that the electronic device 100 is currently playing the song 1. The song playing component 411 may further include a pause control, a next-song control, and a previous-song control, so that the user controls, by using the control in the song playing component 411, music played by the electronic device 100. The song playing component 411 may further include lyrics (not shown in the figure). Content included in the song playing component 411 is not limited in this embodiment of this application. The wake-up identifier 412 may indicate that the voice assistant in the electronic device 100 is in the wake-up state. In other words, when the voice assistant is in the wake-up state, the electronic device 100 may display the wake-up identifier 412 on the user interface 420.

When the voice assistant is in the wake-up state, the electronic device 100 may run a high computing power voice recognition model to recognize the intention corresponding to the received voice, to perform voice interaction with the user. The electronic device 100 may run one or more high computing power voice recognition models when the voice assistant is in the wake-up state. A quantity of high computing power voice recognition models is not limited in this embodiment of this application.

In some embodiments, when the voice assistant is in the wake-up state, the electronic device 100 may stop running the low computing power voice recognition model. That is, the low computing power voice recognition model may be run only when the voice assistant is in the sleep state. The high computing power voice recognition model may be run only when the voice assistant is in the wake-up state.

It may be understood that, after the user speaks a voice that matches an extension intention, the user may continue to deliver the voice instruction. Therefore, when recognizing that the detected voice matches the extension intention, the electronic device 100 may wake up the voice assistant, and better respond to a subsequent request of the user by using the high computing power voice recognition model, to implement a plurality of rounds of voice interaction with the user.

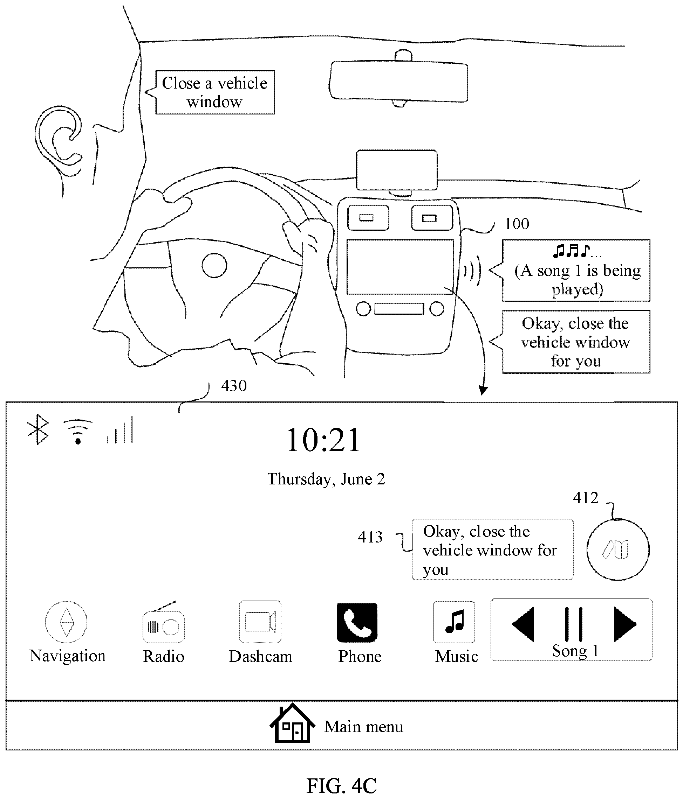

As shown in FIG. 4C, when the voice assistant is in the wake-up state, the user delivers a voice instruction "close a vehicle window" to the electronic device 100 in the vehicle. The electronic device 100 may detect a voice "close a vehicle window" in the environment. The electronic device 100 may recognize an intention of the voice by using the high computing power voice recognition model, and perform an operation corresponding to the intention, that is, invoke a module for controlling the vehicle window to close the vehicle window.

For example, when detecting the voice instruction "close a vehicle window", the electronic device 100 may perform voice playing "okay, close the vehicle window for you", and close the vehicle window. The electronic device 100 may display a user interface 430 shown in FIG. 4C. The user interface 430 may include the wake-up identifier 412 and a voice broadcast component 413. The voice broadcast component 413 may display content that is voice broadcast by the electronic device 100 in response to the voice instruction of the user.

When no human voice or voice instruction is detected in a preset time period, the electronic device 100 may switch the voice assistant from the wake-up state to the sleep state. In this way, when the user does not deliver the voice instruction, power consumption of the high computing power voice recognition model that is run by the electronic device 100 for a long time may be avoided from being excessively high.

It may be learned from the scenario shown in FIG. 4A to FIG. 4C that when delivering some commonly used voice instructions to the electronic device 100, the user may directly deliver the voice instruction without performing a wake-up operation of waking up the voice assistant. This may help the user quickly perform voice control on the electronic device in some common scenarios (for example, a scenario of controlling a hardware device in the vehicle, a scenario of listening to music, and a navigation scenario). In addition, the user may continuously deliver a plurality of voice instructions to the electronic device 100, and perform a plurality of rounds of voice interaction with the electronic device 100. In the plurality of rounds of voice interaction, the user may not need to perform the wake-up operation of waking up the voice assistant. In the foregoing embodiment, smoothness of voice interaction between the user and the electronic device may be improved.

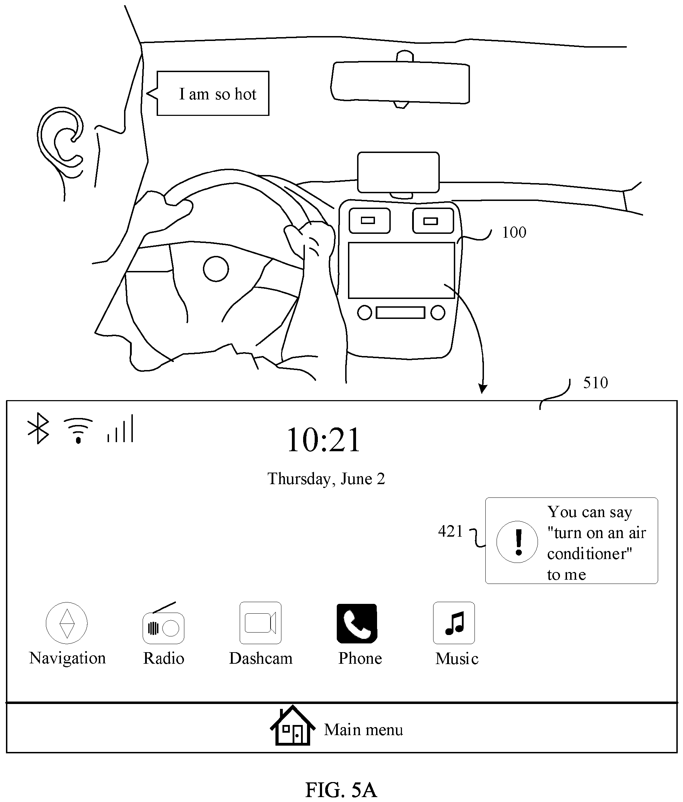

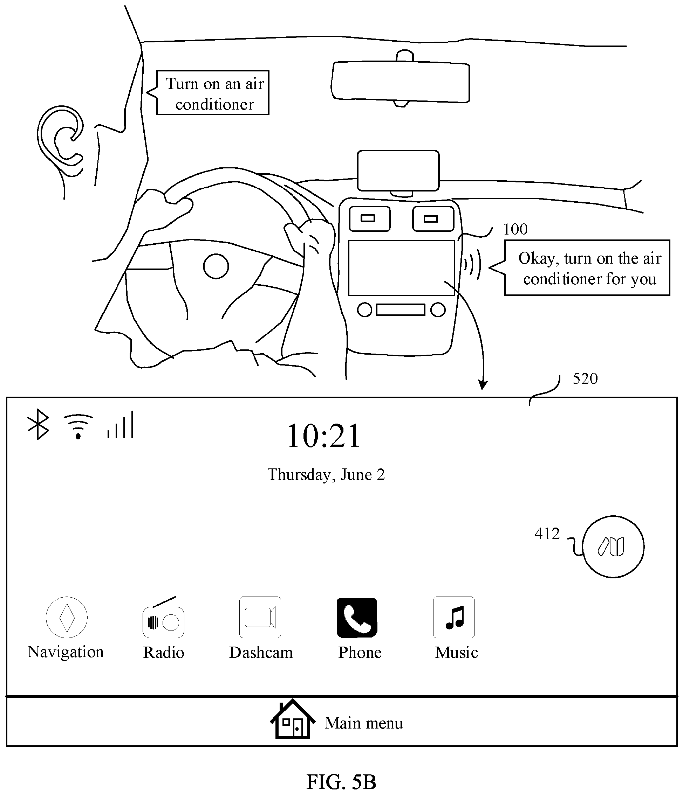

**FIG. 5A** **and** **FIG. 5B** **show an example of another wake-up-free voice interaction scenario according to an embodiment of this application.**

As shown in FIG. 5A, a voice assistant in an electronic device 100 is currently in a sleep state. A user speaks a voice "I am so hot". An extension intention list stored in the electronic device 100 includes an extension intention "I am so hot". In addition, the extension intention "I am so hot" is associated with an execution intention "turn on an air conditioner" in an execution intention list.

The electronic device 100 may detect the voice "I am so hot" in an environment. The electronic device 100 may recognize, by using a low computing power voice recognition model, that there is no execution intention that matches the voice in the execution intention list. Then, the electronic device 100 may determine whether the voice matches the extension intention in the extension intention list. Because the extension intention list includes the intention "I am so hot", the electronic device 100 may recognize that the detected voice matches the extension intention. The electronic device 100 may confirm with the user whether to deliver a voice instruction. Specifically, the electronic device 100 may display a user interface 510 shown in FIG. 5A based on the execution intention associated with the extension intention "I am so hot". The user interface 510 may include a prompt box 421. Prompt content in the prompt box 421 may be used to guide the user to speak the voice that matches the execution intention associated with the extension intention "I am so hot". For example, the prompt content in the prompt box 421 may be: you can say "turn on an air conditioner" to me.

As shown in FIG. 5B, the user may say a voice "turn on an air conditioner" based on the prompt in the prompt box 421 shown in FIG. 5A. The electronic device 100 may detect the voice "turn on an air conditioner" in the environment. The voice assistant in the electronic device 100 is still in the sleep state. The electronic device 100 may recognize, by using the low computing power voice recognition model, that the voice matches the execution intention "turn on an air conditioner". Then, the electronic device 100 may perform an operation corresponding to the execution intention, that is, invoke a module for controlling the air conditioner in a vehicle to turn on the air conditioner. In addition, when recognizing that the detected voice matches the execution intention, the electronic device 100 may further wake up the voice assistant, and switch the voice assistant from the sleep state to a wake-up state.

For example, when recognizing that the detected voice matches the execution intention, the electronic device 100 may perform voice broadcast "okay, turning on the air conditioner for you", and invoke the module for controlling the air conditioner to turn on the air conditioner. The electronic device 100 may display a user interface 520 shown in FIG. 5B. The user interface 520 may include a wake-up identifier 412. The wake-up identifier 412 may indicate that the voice assistant is in the wake-up state.

In some embodiments, one extension intention may be associated with a plurality of execution intentions. For example, an extension intention "a volume is too low" may be associated with an execution intention "turn up a system volume", and may also be associated with an execution intention "turn up a navigation volume". When the detected extension intention that matches the voice is associated with the plurality of execution intentions, the electronic device 100 may prompt the user to speak one of the plurality of execution intentions. For example, when detecting that the voice "a volume is too low", the electronic device 100 may display the prompt box on the interface, to prompt the user to speak "turn up a system volume" or "turn up a navigation volume". In this way, the electronic device 100 may determine whether the user wants to deliver the voice instruction and what the intention corresponding to the voice instruction that the user wants to deliver is.

A manner in which the electronic device 100 confirms, with the user, whether to deliver the voice instruction when recognizing that the detected voice matches the extension intention is not limited in this embodiment of this application.

In some embodiments, after the electronic device 100 displays the prompt box 421 shown in FIG. 5A, if the electronic device 100 does not detect the voice that matches the execution intention "I am so hot", the electronic device 100 may still keep the voice assistant in the wake-up state. It may be understood that, that the user speaks, in the vehicle, the voice (for example, "I am so hot") that matches the extension intention does not necessarily indicate that the user is delivering the voice instruction. If the user further speaks a corresponding voice (for example, turn on the air conditioner) based on a prompt of the electronic device 100, it may indicate that the user speaks, in the vehicle, the voice that matches the extension intention is delivering the voice instruction. If the user does not speak a corresponding voice based on a prompt of the electronic device 100, it may indicate that the user speaks, in the vehicle, the voice that matches the extension intention is not delivering the voice instruction (for example, may be chatting with another person).

It may be learned from the scenario shown in FIG. 5A and FIG. 5B that, by using the extension intention list, the electronic device may further prompt, in response to a doubtful voice that is spoken by the user, the user to speak a more direct and doubtless voice instruction (namely, a voice that matches the execution intention associated with the extension intention), to determine whether the user delivers the voice instruction. In the foregoing embodiment, when the user speaks the voice that matches the extension intention and actually wants to deliver the voice instruction, the user may be prompted to speak a more direct statement, so that the electronic device may perform an operation corresponding to the voice instruction that the user wants to deliver. However, when the voice spoken in a scenario in which the voice instruction is not delivered, for example, a scenario in which the user chats, matches the extension intention list, a prompt operation of the electronic device 100 does not excessively disturb a behavior of the user. In the foregoing embodiment, when the voice assistant is not woken up, the voice instruction that may be delivered by the user is not missed for recognition, and an error response to a voice of a non-voice instruction that is spoken by the user is not made, thereby improving voice interaction experience of the user.

**The following describes a method for recognizing, by the electronic device 100 by using a low computing power voice recognition model, whether a detected voice matches an execution intention.**

In some embodiments, the low computing power voice recognition model may include a voice feature extraction model, an acoustic model, and a language model. The electronic device 100 may receive a voice input through a microphone. The electronic device 100 may extract, by using the voice feature extraction model, a voice feature of the voice input. Then, the electronic device 100 may obtain a phoneme sequence from the foregoing voice feature by using the acoustic model, to implement generation from the voice feature to a character. It may be understood that a same pronunciation (namely, a phoneme) may correspond to a plurality of different characters. The electronic device 100 may obtain, by using the acoustic model, a plurality of candidate characters with a same pronunciation as that of the voice input. Further, based on a result output by the acoustic model, the electronic device 100 may determine a text sequence with a maximum probability by using the language model. That is, the electronic device 100 may combine the plurality of candidate characters obtained by using the acoustic model, to obtain a group of text sequences with a maximum probability in text sequences represented by the voice input. After the electronic device 100 obtains the text sequence, the electronic device 100 may determine whether an execution intention list includes an execution intention that matches the text sequence. If the execution intention list includes the execution intention that matches the text sequence, it indicates that a voice detected by the electronic device 100 matches the execution intention. If the execution intention list does not include the execution intention that matches the text sequence, it indicates that a voice detected by the electronic device 100 does not match the execution intention.

It may be learned from the foregoing embodiment that execution intentions may be classified into an intention with an entity and an intention without an entity. The intention with an entity may include a sentence pattern and an entity. The execution intention list may correspond to a sentence pattern list and an entity list. After the electronic device 100 recognizes the received voice input by using the low computing power voice recognition model, to obtain the text sequence with a maximum probability, the electronic device 100 may determine whether a sentence pattern of the text sequence exists in the sentence pattern list. If the sentence pattern of the text sequence exists in the sentence pattern list (that is, the voice spoken by the user hits the sentence pattern), the electronic device 100 may determine whether an entity in the text sequence exists in the entity list. When determining that the sentence pattern of the text sequence exists in the sentence pattern list, the electronic device 100 may search, based on an entity category corresponding to an entity placeholder in the sentence pattern, the entity list for whether the entity category includes the entity in the text sequence. The electronic device 100 may not need to compare the text sequence with all intentions with entities in the execution intention list one by one. This may simplify a process in which the electronic device 100 recognizes whether the detected voice matches the execution intention.

In some embodiments, when the user delivers a voice instruction, content spoken by the user may not be the exactly same as that of the execution intention. For example, the execution intention is "play a song 1". When the user wants to control the electronic device 100 to play the song 1 through voice, the user may use expressions such as "bo fang ge qu 1 (play a song 1)", "bang wo bo fang ge qu 1 (help me play a song 1)", and "bang wo bo fang ge qu 1 ba (help me play a song 1)". It may be learned that some expressions are execution intentions to which prefixes and/or suffixes are added. The foregoing prefixes and/or suffixes do not affect meanings expressed by the foregoing expressions. The electronic device 100 may store a prefix/suffix list. For example, the prefix/suffix list may include prefixes: "qing (please)", "bang wo (help me)", and "qing bang wo (please help me)", and suffixes: "le (has been)", "ba (could you, a Chinese modal particle)", and the like. The prefix and the suffix are not specifically limited in this embodiment of this application. It may be learned from the foregoing embodiment that the electronic device 100 may recognize the detected voice by using the low computing power voice recognition model, to obtain the text sequence with a maximum probability. The electronic device 100 may determine whether the text sequence includes the prefix and the suffix in the prefix/suffix list. If the text sequence includes the prefix and the suffix in the prefix/suffix list, the electronic device 100 may remove the prefix and/or the suffix from the text sequence, and then compare the text sequence with the execution intention. The electronic device 100 may determine whether the execution intention list includes the execution intention that matches the text sequence from which the prefix and/or the suffix are/is removed. If the execution intention list includes the execution intention that matches the text sequence, it indicates that the voice detected by the electronic device 100 matches the execution intention. If the execution intention list does not include the execution intention that matches the text sequence, it indicates that the voice detected by the electronic device 100 does not match the execution intention. According to the foregoing embodiment, when the user delivers the voice instruction without performing a wake-up operation, a plurality of different statements may be used, and the statements do not need to be the exactly same as those of the extension intention. This may better improve user experience of using a voice interaction function.

The electronic device 100 may further use the low computing power voice recognition model to recognize whether the detected voice matches the extension intention. For a specific method, refer to the foregoing method for recognizing whether the detected voice matches the execution intention. Details are not described herein again.

**Based on the foregoing wake-up-free voice interaction scenario, the following describes a voice interaction method according to an embodiment of this application.**

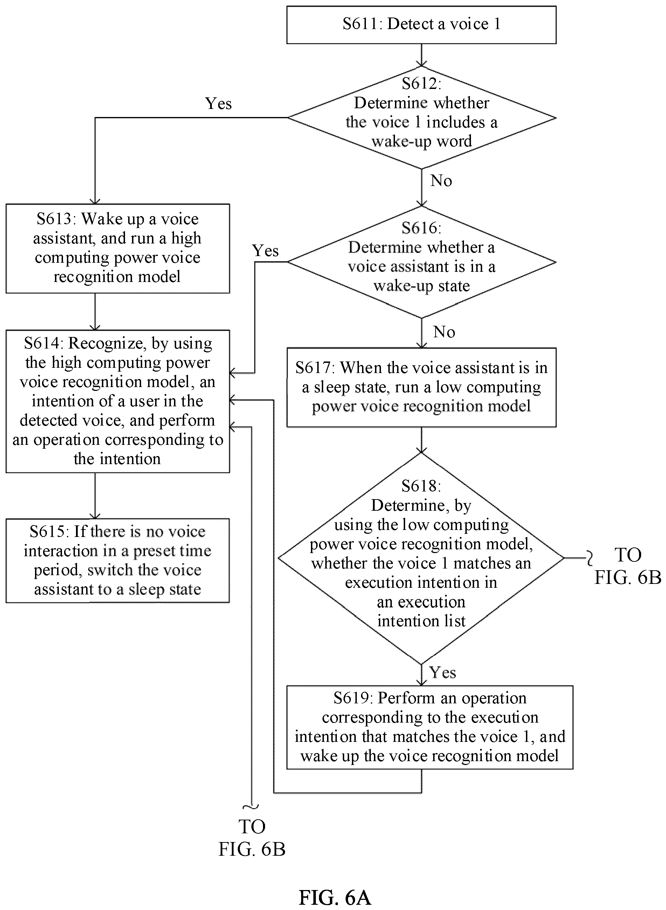

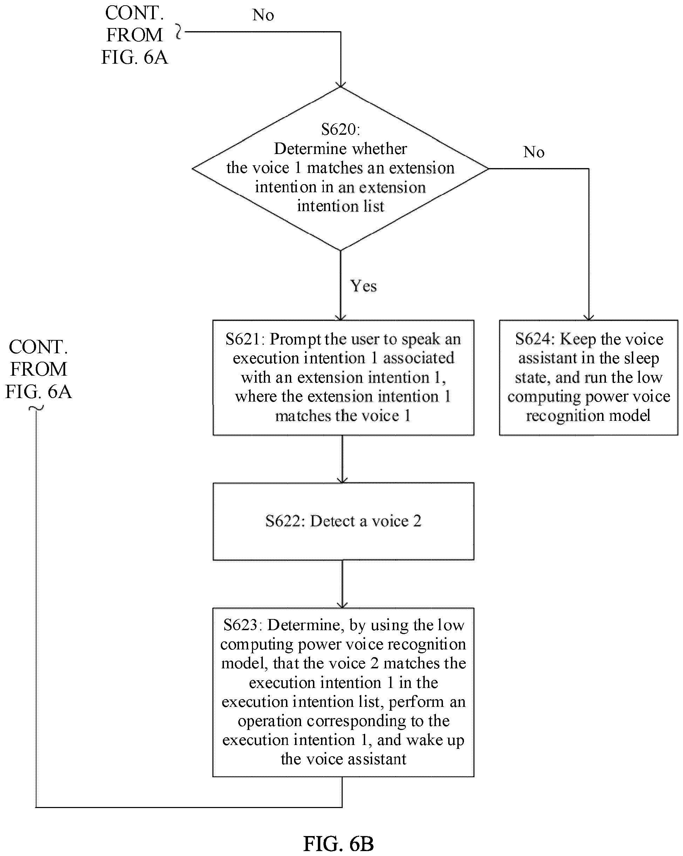

For example, FIG. 6A and FIG. 6B are a flowchart of a voice interaction method. As shown in FIG. 6A and FIG. 6B, the method may include S611 to S624.

S611: Detect a voice 1.

An electronic device 100 may collect a sound in a surrounding environment in real time through a microphone. When a user speaks near the electronic device 100, the electronic device 100 may detect a voice, for example, the voice 1, in the collected sound through a processor.

S612: Determine whether the voice 1 includes a wake-up word.

When detecting the voice 1, the electronic device 100 may determine whether the voice 1 includes the wake-up word. The electronic device 100 may determine, by using a wake-up voice recognition model, whether the voice 1 includes the wake-up word. The wake-up voice recognition model and a low computing power voice recognition model in this application may be a same model, or may be different models. A specific method for determining whether the voice 1 includes the wake-up word is not limited in this embodiment of this application.

When determining that the voice 1 includes the wake-up word, the electronic device 100 may perform the following step S613. When determining that the voice 1 does not include the wake-up word, the electronic device 100 may perform the following step S616.

**Case 1: (S613 and S614) The voice 1 is the wake-up word, and the electronic device 100 wakes up a voice assistant.**

S613: Wake up the voice assistant, and run a high computing power voice recognition model.

When detecting the wake-up word, the electronic device 100 may wake up the voice assistant. When the voice assistant is in a wake-up state, the electronic device 100 may run the high computing power voice recognition model.

S614: Recognize, by using the high computing power voice recognition model, an intention of the user in the detected voice, and perform an operation corresponding to the intention.

When the voice assistant is in the wake-up state, the electronic device 100 may collect the sound in the surrounding environment through the microphone, detect, through the processor, the voice included in the collected sound, recognize, by using the high computing power voice recognition model, the intention of the user in the detected voice, and perform the operation corresponding to the intention.

For example, the voice 1 is a voice corresponding to the wake-up word (for example, "Celia, Celia") spoken by the user. After recognizing that the voice 1 includes the wake-up word, the electronic device 100 may wake up the voice assistant. After detecting the voice 1, the electronic device 100 further detects a voice corresponding to a voice instruction "open a vehicle window" delivered by the user. The electronic device 100 may run the high computing power voice recognition model to recognize an intention corresponding to the detected voice instruction (that is, open the vehicle window). Then, the electronic device 100 may invoke a module for controlling the vehicle window to open the vehicle window.

In addition to waking up the voice assistant by using the foregoing wake-up word, the electronic device 100 may further wake up the voice assistant in response to another wake-up operation (for example, an operation performed on a physical button or a virtual button).

In other words, in the voice interaction method provided in this application, the user may still wake up the voice assistant by using a wake-up operation, and then deliver the voice instruction to the electronic device 100. After the voice assistant is woken up, the electronic device 100 may recognize the voice instruction by using the voice assistant, and perform an operation corresponding to the voice instruction.

S615: If there is no voice interaction in a preset time period, switch the voice assistant to a sleep state.

After waking up the voice assistant, the electronic device 100 may detect, in real time, whether the user performs voice interaction with the electronic device 100. If detecting that the user performs voice interaction with the electronic device 100, the electronic device 100 may keep the voice assistant in the wake-up state, recognize the voice instruction, and perform the operation corresponding to the voice instruction. If not detecting, in the preset time period, that the user performs voice interaction with the electronic device 100, the electronic device 100 may switch the voice assistant to the sleep state, to reduce power consumption of the electronic device 100. The preset time period may be, for example, one minute, two minutes, or the like. A value of the preset time period is not limited in this embodiment of this application.

In a possible implementation, the electronic device 100 may determine, by detecting whether there is the sound in the surrounding environment, whether the user performs voice interaction with the electronic device 100. When the electronic device 100 detects that there is the sound in the surrounding environment, it may indicate that voice interaction exists. In another possible implementation, the electronic device 100 may determine, by recognizing whether the detected voice includes the voice instruction used to control the electronic device 100, whether the user performs voice interaction with the electronic device 100. When the electronic device 100 recognizes that the detected voice includes the voice instruction, it may indicate that voice interaction exists.

It may be learned that after the voice assistant is woken up, if the user continuously performs voice interaction with the electronic device 100, the electronic device 100 may keep the voice assistant in the wake-up state. In this way, when performing a plurality of rounds of voice interaction with the electronic device 100, the user does not need to frequently perform the wake-up operation.

S616: Determine whether a voice assistant is in a wake-up state.

When no wake-up word is detected, the electronic device 100 may determine whether the voice assistant is currently in the wake-up state.

If the voice assistant is already in the wake-up state when the electronic device 100 detects the voice 1, the electronic device 100 may perform the foregoing step S614. Specifically, the electronic device 100 may recognize the intention of the user in the voice 1 by using the high computing power voice recognition model, and perform the operation corresponding to the intention.

If the voice assistant is not in the wake-up state when the electronic device 100 detects the voice 1, the electronic device 100 may perform the following step S617.

**Case 2: (S617 to S619) The voice 1 is a voice that matches an execution intention.**

S617: When the voice assistant is in a sleep state, run a low computing power voice recognition model.

The voice assistant is not in the wake-up state, that is, the voice assistant is in the sleep state.

S618: Determine, by using the low computing power voice recognition model, whether the voice 1 matches the execution intention in an execution intention list.

For an implementation method for determining, by the electronic device 100, whether the voice 1 matches the execution intention, refer to the descriptions in the foregoing embodiment.

If determining that the voice 1 matches the execution intention in the execution intention list, the electronic device 100 may perform the following step S619. Otherwise, the electronic device 100 may perform the following step S620.

S619: Perform an operation corresponding to the execution intention that matches the voice 1, and wake up the voice recognition model.

For example, the voice 1 may be a voice, corresponding to "play a song 1", that is spoken by the user. The execution intention list includes the execution intention "play a song 1". When the voice 1 is detected, the voice assistant in the electronic device 100 is in the sleep state. The electronic device 100 may determine, by using the low computing power voice recognition model, that the voice 1 matches the execution intention "play a song 1". In this case, the electronic device 100 may perform the operation corresponding to the execution intention "play a song 1", that is, start to play the song 1.

When determining that the voice 1 matches the execution intention in the execution intention list, the electronic device 100 may further wake up the voice recognition model, to more accurately recognize a subsequent voice of the user. After the voice assistant is woken up, the electronic device 100 may perform the foregoing step S614.

For steps S617 to S619, refer to the scenario shown in FIG. 4A to FIG. 4C.

**Case 3: (S620 to S624) The voice 1 is a voice that matches an extension intention.**

S620: Determine whether the voice 1 matches the extension intention in an extension intention list.

When determining that the voice 1 does not match the execution intention in the execution intention list, the electronic device 100 may determine whether the voice 1 matches the extension intention in the extension intention list. The electronic device 100 may still keep the voice assistant in the sleep state.

If determining that the voice 1 matches the extension intention in the extension intention list, the electronic device 100 may perform the following step S621. Otherwise, the electronic device 100 may perform the following step S624.

S621: Prompt the user to speak an execution intention 1 associated with an extension intention 1, where the extension intention 1 matches the voice 1.

The electronic device 100 may determine that the voice 1 matches the extension intention 1 in the extension intention list. The electronic device 100 may determine, in the execution intention list, the execution intention 1 associated with the extension intention 1. In this case, to determine whether the user speaks the voice 1 and is delivering the voice instruction, the electronic device 100 may prompt the user to speak the execution intention 1.

For example, the voice 1 may be a voice, corresponding to "I am so hot", that is spoken by the user. The extension intention list includes the extension intention 1 "I am so hot". The execution intention list includes the execution intention 1 "turn on an air conditioner". When the voice 1 is detected, the voice assistant in the electronic device 100 is in the sleep state. The electronic device 100 may determine, by using the low computing power voice recognition model, that the voice 1 matches the extension intention 1. To determine whether the user speaks the voice 1 and expects the electronic device 100 to perform the operation corresponding to the foregoing execution intention 1, the electronic device 100 may prompt the user to speak the execution intention 1, that is, prompt the user to speak "turn on an air conditioner". For example, as shown in FIG. 5A, the electronic device 100 may display a prompt box 421 on a screen.

S622: Detect a voice 2.

The electronic device 100 may continuously collect the sound in the surrounding environment through the microphone. After prompting the user to speak the execution intention 1 in step S621, the electronic device 100 detects the voice 2.

S623: Determine, by using the low computing power voice recognition model, that the voice 2 matches the execution intention 1 in the execution intention list, perform the operation corresponding to the execution intention 1, and wake up the voice assistant.

The voice assistant in the electronic device 100 is still in the sleep state. The electronic device 100 may determine, by using the low computing power voice recognition model, whether the voice 2 matches the execution intention 1.

When determining that the voice 2 matches the execution intention 1, the electronic device 100 may perform the operation corresponding to the execution intention 1, and wake up the voice assistant. After the voice assistant is woken up, the electronic device 100 may perform the foregoing step S614.

When determining that the voice 2 does not match the execution intention 1, the electronic device 100 may keep the voice assistant in the sleep state.

Herein, an example in which the voice 1 is "I am so hot", the extension intention 1 is "I am so hot", and the execution intention 1 is "turn on an air conditioner" is still used for description. After step S621, if the user speaks "turn on an air conditioner" based on the prompt of the electronic device 100, it may indicate that the user speaks the voice 1 to expect the electronic device 100 to turn on the air conditioner. Then, the electronic device 100 may turn on the air conditioner after detecting the voice that matches the execution intention 1. In this way, a case in which the voice instruction that may be delivered by the user is missed for recognition may be reduced. After step S621, if the user ignores the prompt of the electronic device 100 and does not speak "turn on an air conditioner", it may indicate that the user does not deliver the voice instruction by speaking the voice 1. Then, the electronic device 100 continues to keep the voice assistant in the sleep state, and does not turn on the air conditioner. In this way, a case in which an error response to a voice of a non-voice instruction spoken by the user is made may be reduced.

S624: Keep the voice assistant in the sleep state, and run the low computing power voice recognition model.

For steps S620 to S624, refer to the scenario shown in FIG. 5A and FIG. 5B.

It should be noted that, in some embodiments, the foregoing step S616 is optional. For example, the voice assistant in the electronic device 100 is currently in the sleep state, and the electronic device 100 may run the low computing power voice recognition model, or run the low computing power voice recognition model and wake up the voice recognition model. When recognizing that the detected voice 1 includes the wake-up word, the electronic device 100 may wake up the voice assistant (namely, step S613). When recognizing that the detected voice 1 does not include the wake-up word, the electronic device 100 may recognize, by using the low computing power voice recognition model, whether the voice 1 matches the execution intention in the execution intention list (namely, step S618).

In some embodiments, step S618 and step S620 may be performed simultaneously. An execution sequence of step S618 and step S620 is not limited in this embodiment of this application.

It may be learned from the method shown in FIG. 6A and FIG. 6B that the execution intention list and the extension intention list may reduce impact of a user chat sound, environmental noise, and the like on accurate recognition of the voice instruction by the electronic device 100 when the voice assistant is not woken up. In this way, the electronic device 100 can also quickly respond to the voice instruction of the user when the voice assistant is not woken up. The user may deliver the voice instruction at any time without waking up the voice assistant, to instruct the electronic device 100 to perform the corresponding operation. When recognizing that the detected voice matches the execution intention, the electronic device 100 may further wake up the voice assistant in addition to performing the operation corresponding to the execution intention. In this way, the electronic device 100 may more accurately recognize a subsequent request of the user after the voice assistant is waken up, to accept voice control of the user. The electronic device 100 may switch a status of the voice assistant between the sleep state and the wake-up state based on a status of voice interaction between the user and the electronic device 100. In this way, power consumption of the electronic device 100 can be reduced as much as possible when the user enjoys full-time wake-up-free experience.

In some embodiments, in a process of performing voice interaction, the electronic device 100 may further adjust the execution intention list through self-learning, so that the intention included in the execution intention list is closer to the commonly used voice instruction of the user, to improve use experience of performing voice interaction between the user and the electronic device 100.

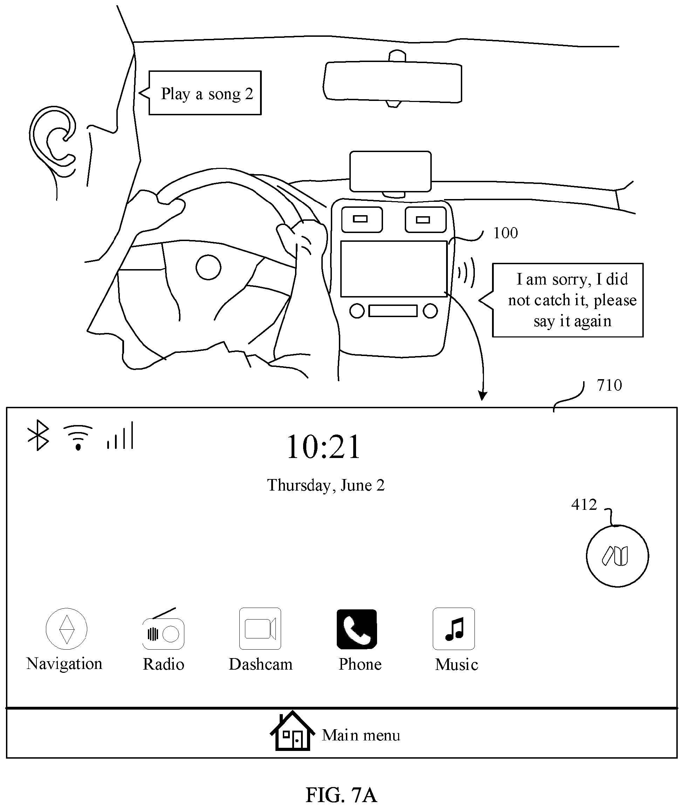

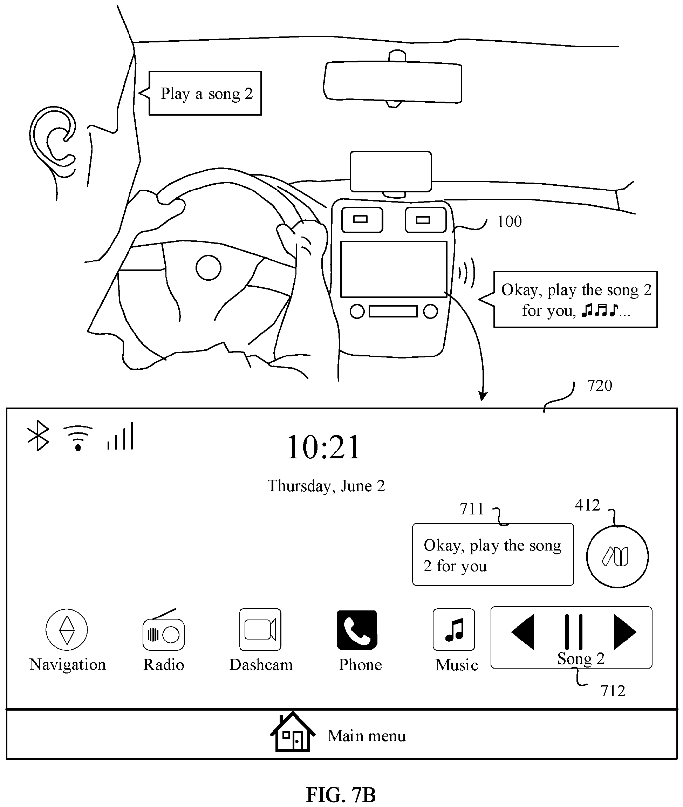

**FIG. 7A** **and** **FIG. 7B** **show an example of a voice interaction scenario according to an embodiment of this application.**

As shown in FIG. 7A, in a vehicle-mounted scenario, a voice assistant in an electronic device 100 may be in a sleep state. A user delivers a voice instruction "play a song 2" to the electronic device 100 in a vehicle.

An execution intention list stored in the electronic device 100 includes an execution intention "play a song 1", but does not include "play a song 2". In other words, a sentence pattern list corresponding to the execution intention list includes a sentence pattern "play [song name]". An entity list corresponding to the execution intention list includes "song 1", but does not include "song 2". In a possible implementation, the song 1 may be a hit song determined based on statistical data. The song 2 may be a non-hit song determined based on statistical data. Whether a song is a hit song can be determined by an on-demand rate of the song. A name of the foregoing hit song can be preset in the entity list. In other words, the entity list may be preset with "song 1", but not be preset with "song 2". In another possible implementation, the electronic device 100 has played the song 1 in response to the voice instruction of the user. The electronic device 100 may add the "song 1" to the entity list. If the electronic device 100 has not received the voice instruction used to play the song 2, the electronic device 100 does not add "song 2" to the entity list. Then, the entity list includes "song 1", but does not include "song 2". In still another possible implementation, the electronic device 100 has played the song 1 for a quantity of times that exceeds a preset quantity of times in response to the voice instruction of the user, but the electronic device has played the song 2 for a quantity of times that does not exceed the preset quantity of times in response to the voice instruction of the user. In this case, the electronic device 100 may add "song 1" to the entity list, but does not add "song 2" to the entity list. Specific content included in the entity list is not limited in this embodiment of this application. In a subsequent embodiment, an example in which the entity list includes "song 1", but does not include "song 2" is used for description.

The electronic device 100 may detect the voice "play a song 2" in the environment. The electronic device 100 may recognize, by using the low computing power voice recognition model, that a sentence pattern of the voice matches the sentence pattern "play [song name]" in the sentence pattern list (that is, the voice hits the sentence pattern in the sentence pattern list). However, an entity in the voice does not match any entity in the entity list (that is, the voice does not hit the entity in the entity list). Based on the recognition result, the electronic device 100 may instruct the user to repeat, and wake up the voice assistant.

For example, the electronic device 100 may perform voice broadcast "I am sorry, I did not catch it, please say it again". A method for instructing, by the electronic device 100, the user to repeatedly speak the voice is not limited in this embodiment of this application. In addition, because the voice assistant is woken up, the electronic device 100 may display a wake-up identifier 412 on a user interface 710 shown in FIG. 7A.

As shown in FIG. 7B, the user speaks "play a song 2" again based on the instruction of the electronic device 100 shown in FIG. 7A. The electronic device 100 may detect the voice "play a song 2" in the environment. The voice assistant is currently in a wake-up state. The electronic device 100 may recognize an intention of the user in the voice by using a high computing power voice recognition model, and perform an operation corresponding to the intention. For example, the electronic device 100 may perform voice broadcast "okay, play the song 2 for you", and start to play the song 2. The electronic device 100 may further display a user interface 720 shown in FIG. 7B. The user interface 720 may include a voice broadcast component 711 and a song playing component 712. The voice broadcast component 711 may display content that is voice broadcast when the electronic device 100 performs voice interaction with the user. For the song playing component 712, refer to the descriptions of the song playing component 411 shown in FIG. 4B.

In some embodiments, because the voice "play a song 2" hits the sentence pattern in the sentence pattern list corresponding to the execution intention list, and does not hit the entity in the entity list corresponding to the execution intention list, the electronic device 100 may add the entity "song 2" in the voice to the entity list corresponding to the execution intention list. The entity "song 2" may belong to an entity of a song name category in the entity list.

In this case, when the electronic device 100 detects the voice "play a song 2" again when the voice assistant is in the sleep state, because the entity "song 2" has been added to the entity list corresponding to the execution intention list in this case, the electronic device 100 may determine, by using the low computing power voice recognition model, that the voice matches the execution intention in the execution intention list, to directly respond to the voice instruction of the user without waking up the voice assistant, and start to play the song 2.

In some embodiments, when the voice assistant is in the wake-up state, if the voice detected by the electronic device 100 hits the sentence pattern in the sentence pattern list corresponding to the execution intention list, but does not hit the entity in the entity list corresponding to the execution intention list, the electronic device 100 may add the entity in the voice to the entity list corresponding to the execution intention list.

For example, as shown in FIG. 7B, after the electronic device 100 plays the song 2, the user wants to switch the played song to a song 3. The user may speak a voice "play a song 3". Because the voice assistant is still in the wake-up state, the electronic device 100 may recognize the intention of the user in the voice by using the high computing power voice recognition model, and perform an operation corresponding to the intention (that is, play the song 3). In addition, because the execution intention list does not include the execution intention "play a song 3" (that is, the entity list corresponding to the execution intention list does not include the entity "song 3 "), the electronic device 100 may add the entity "song 3" in the voice to the entity list corresponding to the execution intention list. The entity "song 3" may belong to an entity of a song name category in the entity list.

It may be learned from the scenario shown in FIG. 7A and FIG. 7B that, even if the voice instruction delivered by the user currently does not match the execution intention in the execution intention list, the user may implement voice control on the electronic device 100 under the instruction of the electronic device 100. In the foregoing voice interaction process, the user does not need to perform the wake-up operation. In addition, the electronic device 100 may add, through self-learning in the voice interaction process, the execution intention that matches the voice instruction delivered by the user to the execution intention list through self-learning. In this way, when subsequently detecting a same voice instruction again, the electronic device 100 may quickly respond to the voice instruction of the user without waking up the voice assistant. In other words, when the user subsequently delivers the same voice instruction again, the user may not perform the wake-up operation.

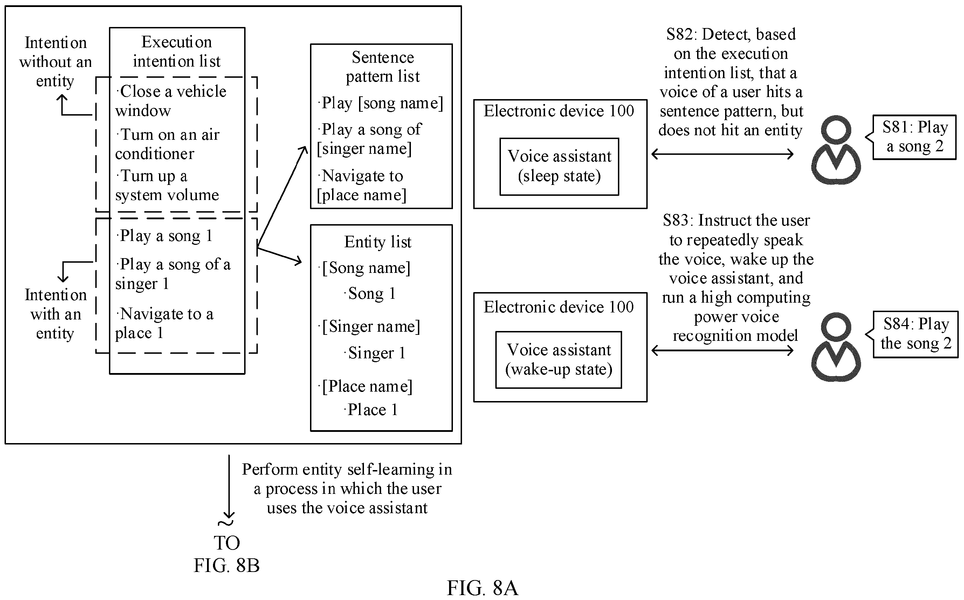

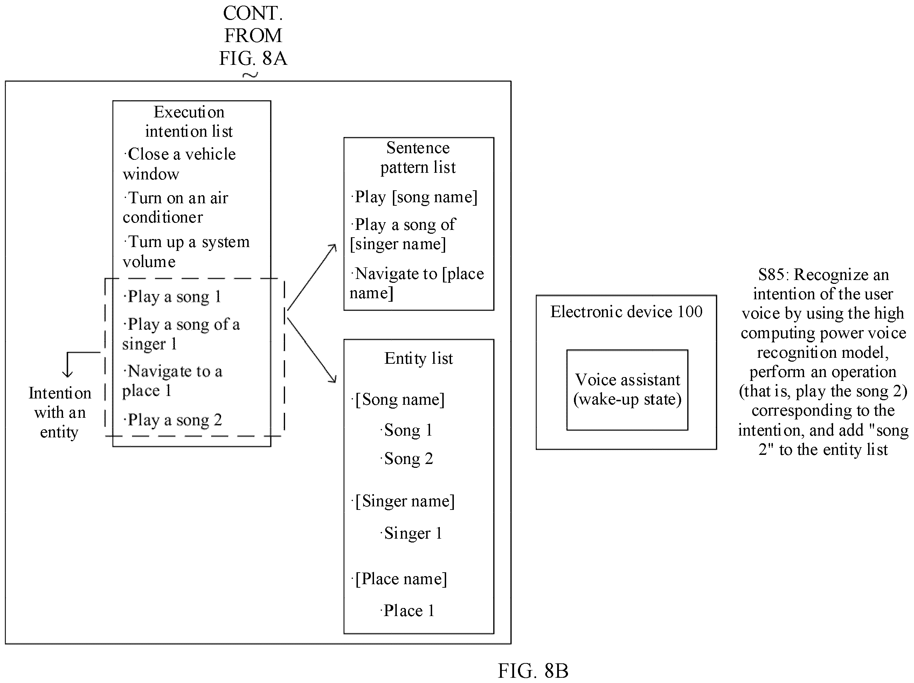

**FIG. 8A** **and** **FIG. 8B** **show an example of a method for adjusting an execution intention list by an electronic device 100 through self-learning according to an embodiment of this application.**

As shown in FIG. 8A and FIG. 8B, the execution intention list currently stored in the electronic device 100 may include the following execution intentions: "close a vehicle window", "turn on an air conditioner", "turn up a system volume", "play a song 1", "play a song of a singer 1", and "navigate to a place 1". It may be learned from the categories of the execution intentions in the foregoing embodiment that "close a vehicle window", "turn on an air conditioner", and "turn up a system volume" are intentions without entities, and "play a song 1", "play a song of a singer 1 ", and "navigate to a place 1" are intentions with entities. The intention with an entity may include a sentence pattern and an entity. In this case, the execution intention list may correspond to a sentence pattern list and an entity list. The sentence pattern list may include the following sentence patterns: "play [song name]", "play a song of [singer name]", and "navigate to [place name]". The entity list may include an entity "song 1" of a song name category, an entity "singer 1" of a singer category, and an entity "place 1" of a place name.

The execution intention list does not include an execution intention "play a song 2". That is, the entity list does not include an entity "song 2.

The execution intention list shown in FIG. 8A and FIG. 8B is merely an example for description of this embodiment of this application, and should not constitute a limitation on this application.

S81: A user speaks a voice "play a song 2".

S82: The electronic device 100 detects, based on the execution intention list, that the voice of the user hits the sentence pattern, but does not hit the entity.

A voice assistant in the electronic device 100 is still in a sleep state. When detecting the voice spoken by the user in S81, the electronic device 100 may determine, by using a low computing power voice recognition model, that the sentence pattern of the voice matches a sentence pattern "play [song name]" in the sentence pattern list corresponding to the execution intention list, and that the entity of the voice does not match any entity in the entity list corresponding to the execution intention list. In other words, the voice in S81 hits the sentence pattern, but does not hit the entity.

S83: The electronic device 100 instructs the user to repeatedly speak the voice, wakes up the voice assistant, and runs a high computing power voice recognition model.

For a scenario in which the electronic device 100 prompts the user to repeatedly speak the voice, refer to the scenario shown in FIG. 7A.

S84: The user speaks the voice "play a song 2" again.

S85: The electronic device 100 recognizes an intention of the user voice by using the high computing power voice recognition model, performs an operation (that is, plays the song 2) corresponding to the intention, and adds "song 2" to the entity list.

As shown in FIG. 8A and FIG. 8B, after the foregoing self-learning process, the intention with an entity "play a song 2" is added to the execution intention list. The entity "song 2" is added to the entity list corresponding to the execution intention list. Subsequently, the electronic device 100 may quickly respond to the voice instruction "play a song 2" delivered by the user when the voice assistant is in the sleep state.

In some embodiments, the electronic device 100 may buffer the detected voice. When determining that the detected voice hits the sentence pattern, but does not hit the entity, the electronic device 100 may obtain the voice from a storage module. Then, after the voice assistant is woken up, the electronic device 100 may recognize the intention of the user in the voice by using the high computing power voice recognition model, and perform the operation corresponding to the intention. According to the foregoing method, the user may be prevented from speaking the same voice instruction again, and use experience of performing voice interaction between the user and the electronic device 100 is improved.

Self-learning shown in FIG. 8A and FIG. 8B may also be referred to as entity self-learning. It may be understood that, a sentence pattern of an intention with an entity may support placing any entity of a same entity category at a location of an entity placeholder. The electronic device 100 may detect, in a process in which the user uses the voice assistant, specific entities included in the voice instruction delivered by the user, and add the entities mentioned by the user to the entity list. In this way, the user can quickly perform, without performing the wake-up operation, an operation corresponding to a commonly used voice instruction of the user, for example, play a song frequently listened to by the user, or navigate to a place frequently visited by the user.

It may be learned that the foregoing method for adjusting the execution intention list through self-learning can make the intention included in the execution intention list closer to the commonly used voice instruction of the user, to improve use experience of voice interaction between the user and the electronic device.

In some embodiments, the voice instruction that is spoken when the user delivers the voice instruction may often match the extension intention in the extension intention list. It may be learned from the foregoing embodiment that, after the user speaks the voice that matches the extension intention, the user further needs to speak, based on the prompt, the execution intention associated with the extension intention, to control the electronic device 100 to perform the corresponding operation. In this case, when the user speaks the voice that matches the extension intention, and speaks, at the prompt of the electronic device 100, the execution intention associated with the extension intention at a frequency exceeding a preset frequency, the electronic device 100 may move the extension intention to the execution intention list, to adjust the extension intention to the execution intention.

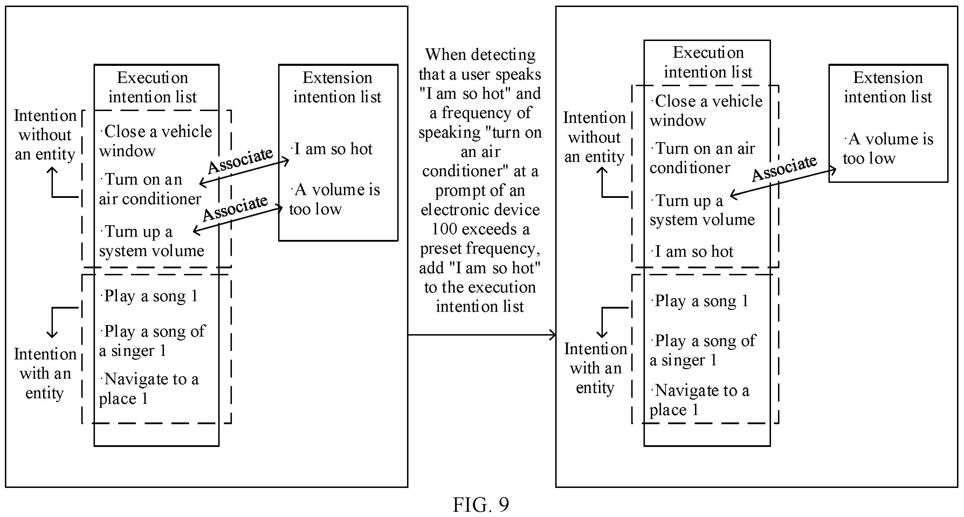

FIG. 9 shows an example of a method for adjusting an execution intention list by an electronic device 100 through self-learning according to an embodiment of this application.

As shown in FIG. 9, the execution intention list currently stored in the electronic device 100 includes the following execution intentions: "close a vehicle window", "turn on an air conditioner", "turn up a system volume", "play a song 1 ", "play a song of a singer 1 ", and "navigate to a place 1". It may be learned from the categories of the execution intentions in the foregoing embodiment that "close a vehicle window", "turn on an air conditioner", and "turn up a system volume" are intentions without entities, and "play a song 1", "play a song of a singer 1", and "navigate to a place 1" are intentions with entities.

An extension intention list currently stored in the electronic device 100 includes the following extension intentions: "I am so hot" and "a volume is too low".

The extension intention "I am so hot" is associated with the execution intention "turn on an air conditioner". The extension intention "a volume is too low" is associated with the execution intention "turn up a system volume".

The execution intention list, the extension intention list, and an association relationship between the execution intention and the extension intention that are shown in FIG. 9 are merely examples for description of this embodiment of this application, and should not constitute a limitation on this application.

It may be learned from the foregoing scenario shown in FIG. 5A and FIG. 5B that the user speaks the voice "I am so hot" near the electronic device 100. A voice assistant in the electronic device 100 is still in a sleep state. The electronic device 100 may recognize, by using a low computing power voice recognition model, that the detected voice matches the extension intention "I am so hot". The electronic device 100 may prompt the user to speak the execution intention "turn on an air conditioner" associated with the extension intention "I am so hot". When detecting that the voice is "turn on an air conditioner", the electronic device 100 may invoke a module for controlling the air conditioner to turn on the air conditioner.

In some embodiments, when the electronic device 100 detects that a frequency at which the user speaks "I am so hot" (namely, the voice that matches the extension intention "I am so hot") and speaks "turn on an air conditioner" (namely, the execution intention associated with the extension intention "I am so hot") at a prompt of the electronic device 100 exceeds a preset frequency, the electronic device 100 may add the extension intention "I am so hot" to the execution intention list, and remove the extension intention from the extension intention list. In this way, the extension intention "I am so hot" is converted into the execution intention. When the electronic device 100 subsequently detects, when the voice assistant is in the sleep state, that the voice is "I am so hot", the electronic device 100 may directly invoke the module for controlling the air conditioner to turn on the air conditioner.

As shown in FIG. 9, after the foregoing self-learning process, the intention without an entity "I am so hot" is added to the execution intention list. The extension intention "I am so hot" is removed from the extension intention list.

It may be learned that, according to the foregoing self-learning method, the extension intention that matches the voice frequently spoken by the user in the voice instruction delivery scenario may be converted into the execution intention, so that the extension intention list includes more intentions that are closer to idioms used when the user delivers the voice instruction. By using the execution intention list and the extension intention list that are obtained after self-learning, the electronic device 100 may better respond to the voice instruction directly delivered by the user without performing the wake-up operation, to improve use experience of voice interaction between the user and the electronic device 100.

In some embodiments, if the user finds, in a process of using a voice interaction function of the electronic device 100, that a recognition error rate of one or more execution intentions in the execution intention list is high, the one or more execution intentions may be moved to the extension intention list, to adjust the one or more execution intentions to the extension intention.

The electronic device 100 may detect a frequency of withdrawing or canceling the performed operation in response to the user operation in a preset time period after the operation corresponding to the execution intention is performed. If the frequency is higher than the preset frequency, it indicates that the recognition error rate of the execution intention is high. The electronic device 100 may adjust the foregoing one execution intention to the extension intention. Alternatively, operation personnel of the voice assistant may find, in a test process of the low computing power voice recognition model, that the recognition error rate of the one or more execution intentions is high. Alternatively, the operation personnel of the voice assistant may collect a feedback of the user, and determine, based on the feedback of the user, that the recognition error rate of the one or more execution intentions is high. An implementation method for determining whether the execution intention has a high recognition error rate is not limited in this embodiment of this application.

After the execution intention with a high recognition error rate is adjusted to the extension intention, when detecting the voice that matches the extension intention, the electronic device 100 may first confirm with the user whether to deliver the voice instruction. When confirming that the user delivers the voice instruction, the electronic device 100 may perform the operation corresponding to the extension intention. According to the foregoing method, in a scenario in which the voice instruction is delivered without waking up the voice assistant, a case of false recognition caused because a voice of a non-voice instruction is used as the voice instruction may be reduced, and use experience of performing voice interaction between the user and the electronic device 100 may be improved.

It may be understood that the user interfaces described in this embodiment of this application are merely example interfaces, and do not constitute a limitation on the solutions of this application. In another embodiment, the user interface may use different interface layouts, may include more or fewer controls, and may add or reduce other functional options, which shall fall within the protection scope of this application provided that the user interface is based on a same inventive idea provided in this application.

It should be noted that, when no contradiction or conflict occurs, any feature or any part of any feature in any embodiment of this application may be combined, and a technical solution obtained after combination also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A voice interaction method, wherein the method is applied to an electronic device, the electronic device comprises a voice assistant, and the method comprises:
receiving a first voice when the voice assistant is in a sleep state;
determining that the first voice matches a first intention in a first list, wherein the first list comprises one or more intentionscorresponding to one or more voice instructions;
performing an operation corresponding to the first intention;
waking up the voice assistant;
receiving a second voice when the voice assistant is in a wake-up state; and
recognizing a second intention in the second voice, and performing an operation corresponding to the second intention.

2. The method according to claim 1, wherein neither the first voice nor the second voice comprises a wake-up word used to wake up the voice assistant.

3. The method according to claim 1 or 2, wherein the determining that the first voice matches a first intention in a first list specifically comprises:
determining, by using a first voice recognition model, that the first voice matches the first intention in the first list, wherein the first voice recognition model is run when the voice assistant is in the sleep state; and
the recognizing a second intention in the second voice specifically comprises:
recognizing the second intention in the second voice by using a second voice recognition model, wherein the second voice recognition model is run when the voice assistant is in the wake-up state; and
a size of the second voice recognition model is greater than a size of the first voice recognition model.

4. The method according to any one of claims 1 to 3, wherein after the waking up the voice assistant, the method further comprises:
switching the voice assistant from the wake-up state to the sleep state when no voice is received in a first time period.

5. The method according to any one of claims 1 to 4, wherein the first list corresponds to a first sentence pattern list and a first entity list, the first sentence pattern list comprises one or more sentence patterns, the first entity list comprises one or more entities, and the one or more intentions in the first list comprise a sentence pattern in the first sentence pattern list and an entity in the first entity list; and the method further comprises:
receiving a third voice when the voice assistant is in the sleep state;
determining that a sentence pattern of the third voice matches a first sentence pattern in the first sentence pattern list, and that there is no entity that matches a first entity of the third voice in the first entity list;
waking up the voice assistant; and
when the voice assistant is in the wake-up state, recognizing a third intention in the third voice, and performing an operation corresponding to the third intention, wherein the third intention comprises the first sentence pattern and the first entity.

6. The method according to claim 5, wherein the method further comprises:
adding the first entity of the third voice to the first entity list.

7. The method according to claim 6, wherein the method further comprises:
receiving a fourth voice when the voice assistant is in the sleep state;
determining that a sentence pattern of the fourth voice matches the first sentence pattern in the first sentence pattern list, and that an entity of the fourth voice matches the first entity in the first entity list, wherein the fourth voice matches the third intention;
performing the operation corresponding to the third intention; and
waking up the voice assistant.

8. The method according to any one of claims 1 to 7, wherein the method further comprises:
receiving a fifth voice when the voice assistant is in the sleep state;
determining that the fifth voice matches a fourth intention in a second list, wherein one intention in the second list is associated with the one or more intentions in the first list, and the fourth intention is associated with a fifth intention in the first list; and
providing a first prompt, wherein the first prompt is for prompting a user to speak a voice that matches the fifth intention.

9. The method according to claim 8, wherein after the providing a first prompt, the method further comprises:
receiving a sixth voice;
determining that the sixth voice matches the fifth intention, and performing an operation corresponding to the fifth intention; and
waking up the voice assistant.

10. The method according to claim 8, wherein after the providing a first prompt, the method further comprises:
if no voice that matches the fifth intention is received in a second time period, canceling the first prompt, and keeping the voice assistant in the sleep state.

11. The method according to any one of claims 8 to 10, wherein the providing a first prompt specifically comprises:
displaying, on a user interface of the electronic device, text information corresponding to the fifth intention, or prompting, through voice broadcast, the user to speak the voice that matches the fifth intention.

12. The method according to any one of claims 8 to 11, wherein the first list comprises a sixth intention, and the method further comprises:
determining that a recognition error rate of the sixth intention is greater than a first threshold, removing the sixth intention from the first list, and adding the sixth intention to the second list.

13. A voice interaction method, wherein the method is applied to an electronic device, the electronic device comprises a voice assistant, and the method comprises:
receiving a first voice when the voice assistant is in a sleep state;
providing a first prompt in response to the first voice, wherein the first prompt is for prompting a user to speak a first instruction; and
receiving a second voice, determining that the second voice matches the first instruction, and performing an operation corresponding to the first instruction.

14. The method according to claim 13, wherein neither the first voice nor the second voice comprises a wake-up word used to wake up the voice assistant.

15. The method according to claim 13 or 14, wherein the providing a first prompt specifically comprises:
displaying, on a user interface of the electronic device, text information corresponding to the first instruction, or prompting, through voice broadcast, the user to speak a voice that matches the first instruction.

16. The method according to any one of claims 13 to 15, wherein the providing a first prompt in response to the first voice specifically comprises:
determining, in response to the first voice by using a first voice recognition model, that the first voice is associated with the first instruction, wherein the first voice recognition model is run when the voice assistant is in the sleep state; and
providing the first prompt based on an association relationship between the first voice and the first instruction.

17. The method according to claim 16, wherein the determining that the second voice matches the first instruction specifically comprises:
determining, by using the first voice recognition model, that the second voice matches the first instruction.

18. The method according to claim 16, wherein before the determining that the second voice matches the first instruction, the method further comprises:
waking up the voice assistant; and
the determining that the second voice matches the first instruction specifically comprises:
when the voice assistant is in a wake-up state, recognizing the first instruction in the second voice by using a second voice recognition model, wherein the second voice recognition model is run when the voice assistant is in the wake-up state; and
a size of the second voice recognition model is greater than a size of the first voice recognition model.

19. The method according to any one of claims 13 to 17, wherein after the determining that the second voice matches the first instruction, the method further comprises:
waking up the voice assistant; and
when the voice assistant is in a wake-up state, receiving a third voice, recognizing a second instruction in the third voice, and performing an operation corresponding to the second instruction.

20. The method according to claim 18 or 19, wherein after the waking up the voice assistant, the method further comprises:
switching the voice assistant from the wake-up state to the sleep state when no voice is received in a first time period.

21. The method according to any one of claims 13 to 20, wherein the method further comprises:
receiving a fourth voice when the voice assistant is in the sleep state; and
determining that the fourth voice matches a third instruction, and performing an operation corresponding to the third instruction.

22. An electronic device, wherein the electronic device comprises a microphone, a memory, and one or more processors, the microphone is configured to collect a voice, the memory is configured to store a computer program, and the one or more processors are configured to invoke the computer program, so that the electronic device performs the method according to any one of claims 1 to 12 or claims 13 to 21.

23. A computer-readable storage medium, comprising instructions, wherein when the instructions are run on an electronic device, the electronic device is enabled to perform the method according to any one of claims 1 to 12 or claims 13 to 21.

24. A computer program product, wherein the computer program product comprises computer instructions; and when the computer instructions are run on an electronic device, the electronic device is enabled to perform the method according to any one of claims 1 to 12 or claims 13 to 21.
